(19) Europäisches Patentamt
European Patent Office
Office européen des brevets

(11) EP 3 677 634 B1

(12) **EUROPEAN PATENT SPECIFICATION**

(45) Date of publication and mention of the grant of the patent:
**23.03.2022 Bulletin 2022/12**

(21) Application number: **18852388.0**

(22) Date of filing: **29.08.2018**

(51) International Patent Classification (IPC):
***C08L 9/06*** *(2006.01)* ***B60C 1/00*** *(2006.01)*
***B60C 15/06*** *(2006.01)* ***C08K 3/04*** *(2006.01)*
***C08K 3/36*** *(2006.01)* ***C08L 15/00*** *(2006.01)*

(52) Cooperative Patent Classification (CPC):
(C-Sets available)
**B60C 1/0016; B60C 1/00; C08C 19/25; C08K 3/04; C08K 3/36; C08L 9/00; C08L 15/00;**
B60C 2001/0058; B60C 2001/0066; C08L 9/06; Y02T 10/86 (Cont.)

(86) International application number:
**PCT/JP2018/031914**

(87) International publication number:
**WO 2019/044891 (07.03.2019 Gazette 2019/10)**

(54) **RUBBER COMPOSITION FOR HIGH GRIP TIRE**

KAUTSCHUKZUSAMMENSETZUNG FÜR REIFEN MIT HOHER GRIFFIGKEIT

COMPOSITION DE CAOUTCHOUC POUR PNEUMATIQUE ANTIDÉRAPANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2017 JP 2017168627**

(43) Date of publication of application:
**08.07.2020 Bulletin 2020/28**

(73) Proprietor: **Kuraray Co., Ltd.**
**Okayama 710-0801 (JP)**

(72) Inventors:
- **KANBARA, Hiroshi**
  **Kamisu-shi**
  **Ibaraki 314-0197 (JP)**
- **KODA, Daisuke**
  **Kamisu-shi**
  **Ibaraki 314-0197 (JP)**
- **UEHARA, Yosuke**
  **Tokyo 100-8115 (JP)**

(74) Representative: **Müller-Boré & Partner Patentanwälte PartG mbB**
**Friedenheimer Brücke 21**
**80639 München (DE)**

(56) References cited:
**EP-A1- 2 818 507**
**EP-A1- 3 118 251**
**WO-A1-2018/043699**
**WO-A1-2018/043700**
**JP-A- 2001 114 938**
**JP-A- 2002 114 874**
**US-A1- 2015 119 528**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 677 634 B1

(52) Cooperative Patent Classification (CPC): (Cont.)

C-Sets
**C08L 9/06, C08K 3/04, C08K 3/36;**
C08L 9/06, C08K 3/04, C08L 9/00;
C08L 9/06, C08K 3/36, C08L 9/00

## Description

TECHNICAL FIELD

The present invention relates to a high-grip tire rubber composition and to a tire tread, a bead filler, a tire belt and a pneumatic tire which each at least partially include the composition.

BACKGROUND ART

Pneumatic tires are required to be excellent in steering stability and rolling resistance performance (low fuel consumption performance) and further in abrasion resistance. A general approach to attaining enhanced abrasion resistance is to use rubber compositions containing rubber reinforcing agents such as carbon blacks and silicas. Such rubber compositions have a high viscosity and are hence poorly processable. Thus, processability improvers such as process oils and liquid polymers are used. However, conventional processability improvers, although offering better processability, cause a problem that steering stability, rolling resistance performance and abrasion resistance are deteriorated.

To improve the above characteristics in a well-balanced manner, Patent Literature 1 describes a high-performance tire tread rubber composition which includes at least one selected from the group consisting of natural rubbers and diene-based synthetic rubbers, carbon black, and an amphoteric compound containing acidic and basic functional groups. Patent Literature 2 describes a rubber composition obtained by mixing a rubber component, a softener and carbon black in a specific manner.

Further, Patent Literature 3 describes a rubber composition which includes 100 parts by mass of a rubber component including a styrene butadiene rubber, not less than 10 parts by mass of a liquid styrene butadiene rubber having a weight average molecular weight of 1000 to 5000 and a hydrogenation ratio of 40 to 60%, and not less than 5 parts by mass of an aromatic petroleum resin. Patent Literature 4 describes a tire tread rubber composition which includes 100 parts by mass of a diene rubber, the diene rubber including 70 mass% or more styrene butadiene rubber with a styrene content of not less than 30 mass%, 80 to 150 parts by mass of a specific carbon black, 10 to 50 parts by mass of a polyisoprene having a specific number average molecular weight, and 10 to 50 parts by mass of an aromatic modified terpene resin having a specific softening point.

Further, Patent Literature 5 describes a tire tread rubber composition including a specific styrene butadiene rubber and carbon black.

CITATION LIST

PATENT LITERATURE

Patent Literature 1: JP-A-2014-024912
Patent Literature 2: JP-A-2001-081239
Patent Literature 3: JP-A-2007-137941
Patent Literature 4: JP-A-2010-126671
Patent Literature 5: JP-A-2013-185090

SUMMARY OF INVENTION

TECHNICAL PROBLEM

Tires which include the rubber compositions described in Patent Literatures 1 to 5 exhibit improved steering stability, but their performances are still not satisfactory and need further improvements.

The present invention has been made in light of the circumstances discussed above, and provides a high-grip tire rubber composition excellent in steering stability, rolling resistance performance and abrasion resistance, and a tire tread, a bead filler, a tire belt and a pneumatic tire which each partially include the composition.

SOLUTION TO PROBLEM

After extensive studies, the present inventors have found that a high-grip tire rubber composition including specific components such as a specific modified liquid diene rubber, or a crosslinked product of the composition, allows

an article such as a tire tread including the composition or the crosslinked product as a portion thereof to achieve excellent steering stability, rolling resistance performance and abrasion resistance. The present invention has been completed based on the finding.

Specifically, the present invention pertains to [1] to [11] described below.

[1] A high-grip tire rubber composition comprising 100 parts by mass of a solid rubber (A), the solid rubber (A) comprising not less than 60 mass% of a styrene butadiene rubber with 20 mass% or more styrene content, 0.1 to 90 parts by mass of a modified liquid diene rubber (B) having a functional group derived from a silane compound represented by the formula (1) below, and 20 to 150 parts by mass of a filler (C),
the modified liquid diene rubber (B) satisfying the following (i) and (ii):

(i) the weight average molecular weight (Mw) is 15,000 to 120,000, and
(ii) the vinyl content is not more than 70 mol%,

[Chem. 1]

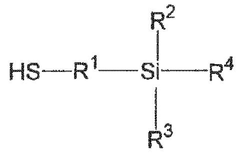

(1)

wherein $R^1$ is a $C_{1-6}$ divalent alkylene group, and $R^2$, $R^3$ and $R^4$ are each independently a methoxy group, an ethoxy group, a phenoxy group, a methyl group, an ethyl group or a phenyl group, with the proviso that at least one of $R^2$, $R^3$ and $R^4$ is a methoxy group, an ethoxy group or a phenoxy group.

[2] The high-grip tire rubber composition described in [1], wherein the melt viscosity of the modified liquid diene rubber (B) at 38°C is 1 to 4,000 Pa·s.
[3] The high-grip tire rubber composition described in [1] or [2], wherein the modified liquid diene rubber (B) is a polymer comprising a monomer unit derived from isoprene and/or butadiene.
[4] The high-grip tire rubber composition described in any one of [1] to [3], wherein the filler (C) is at least one selected from carbon blacks and silicas.
[5] The high-grip tire rubber composition described in [4], wherein the composition contains 5 to 80 parts by mass of the modified liquid diene rubber (B) and 20 to 150 parts by mass of the silica per 100 parts by mass of the solid rubber (A) .
[6] The high-grip tire rubber composition described in [4], wherein the composition contains 5 to 80 parts by mass of the modified liquid diene rubber (B) and 25 to 120 parts by mass of the carbon black per 100 parts by mass of the solid rubber (A).
[7] A crosslinked product obtained by crosslinking the high-grip tire rubber composition described in any one of [1] to [6].
[8] A tire tread comprising, as at least a portion of the tire tread, the high-grip tire rubber composition described in any one of [1] to [6].
[9] A bead filler comprising, as at least a portion of the bead filler, the high-grip tire rubber composition described in any one of [1] to [6].
[10] A tire belt comprising, as at least a portion of the tire belt, the high-grip tire rubber composition described in any one of [1] to [6].
[11] A pneumatic tire comprising, as at least a portion of the pneumatic tire, the high-grip tire rubber composition described in any one of [1] to [6].

ADVANTAGEOUS EFFECTS OF INVENTION

Tire treads, bead fillers and tire belts obtained from the tire rubber composition of the present invention are excellent in properties such as abrasion resistance and rolling resistance performance, and also attain superior steering stability.

DESCRIPTION OF EMBODIMENTS

[Solid rubbers (A)]

The solid rubber (A) used in the rubber composition of the invention is a rubber that can be handled as a solid at 20°C. The Moony viscosity $ML_{1+4}$ of the solid rubber (A) at 100°C is usually in the range of 20 to 200. The solid rubber (A) used herein is one including not less than 60 mass% of a styrene butadiene rubber with 20 mass% or more styrene content. The use of such a rubber leads to enhancements in rolling resistance performance and steering stability of tire treads including the tire rubber composition of the invention as a portion thereof.

The solid rubber (A) is not particularly limited as long as it includes not less than 60 mass% of a styrene butadiene rubber (hereinafter, also written as "SBR") with 20 mass% or more styrene content. The SBR used here may be a general SBR used in tire applications. A mixture of SBR and at least one solid rubber selected from natural rubbers and synthetic rubbers other than SBR may also be used.

To attain enhancements in wet grip performance and dry grip performance of tires including the tire rubber composition as a portion thereof, the styrene content in the SBR is not less than 20 mass%, preferably not less than 22 mass%, more preferably not less than 25 mass%, and still more preferably not less than 30 mass%, and is preferably not more than 50 mass%, more preferably not more than 45 mass%, and still more preferably not more than 40 mass%.

To attain enhancements in rolling resistance performance and steering stability of tires including the tire rubber composition as a portion thereof, the proportion of the SBR with 20 mass% or more styrene content in the solid rubber (A) is not less than 60 mass%, preferably not less than 70 mass%, more preferably not less than 80 mass%, still more preferably not less than 90 mass%, and even more preferably not less than 95 mass%, and may be 100 mass%.

The weight average molecular weight (Mw) of the SBRs with 20 mass% or more styrene content is preferably 100,000 to 2,500,000, more preferably 150,000 to 2,000,000, still more preferably 150,000 to 1,500,000, and further preferably 180,000 to 1,000,000. When the Mw of the SBR is in the above range, the tire rubber composition exhibits enhanced processability, and articles such as tire treads obtained from the tire rubber composition attain enhancements in abrasion resistance.

In the present specification, the Mw is the polystyrene equivalent weight average molecular weight measured by gel permeation chromatography (GPC).

The glass transition temperature (Tg) of the SBRs with 20 mass% or more styrene content, measured by differential thermal analysis, is preferably -95 to 0°C, more preferably -80 to -5°C, still more preferably -70 to -10°C, further preferably -60 to -15°C, particularly preferably -50 to -20°C, and most preferably -40°C to -20°C. This range of glass transition temperature ensures that the tire rubber composition will exhibit a viscosity that is not excessively high and will be handled easily.

In the SBR with 20 mass% or more styrene content, the vinyl content is preferably 0.1 to 80 mass%, more preferably 10 to 80 mass%, and still more preferably 20 to 80 mass%.

The vinyl content in the SBRs in the present specification means the content of vinyl group-containing monomer units relative to all the butadiene-derived units contained in the SBR. Similarly, the vinyl content in the solid rubber (A) described later means the content of monomer units which actually have a vinyl group relative to the total amount of units from a monomer which can have a vinyl group depending on the bonding pattern.

The solid rubber (A) used in the present invention may be a mixture of SBR with 20 mass% or more styrene content and SBR with less than 20 mass% styrene content. Such SBRs may be produced by, for example, the processes described below.

The SBR production process is not particularly limited and may be any of emulsion polymerization, solution polymerization, gas-phase polymerization and bulk polymerization. In particular, emulsion polymerization and solution polymerization are preferable.

(i) Emulsion-polymerized styrene butadiene rubbers (E-SBRs)

E-SBR may be produced by a usual emulsion polymerization process. For example, such a rubber may be obtained by emulsifying and dispersing predetermined amounts of styrene and butadiene monomers in the presence of an emulsifier, and emulsion polymerizing the monomers with a radical polymerization initiator.

Examples of the emulsifiers which may be used include long-chain fatty acid salts having 10 or more carbon atoms, and rosin acid salts. Specific examples include potassium salts and sodium salts of fatty acids such as capric acid, lauric acid, myristic acid, palmitic acid, oleic acid and stearic acid.

Usually, water is used as the dispersion medium. The dispersion medium may include a water-soluble organic solvent such as methanol or ethanol as long as the stability during the polymerization is not impaired.

Examples of the radical polymerization initiators include persulfate salts such as ammonium persulfate and potassium persulfate, organic peroxides and hydrogen peroxide.

To control the molecular weight of the E-SBR that is obtained, a chain transfer agent may be used. Examples of the chain transfer agents include mercaptans such as t-dodecylmercaptan and n-dodecylmercaptan; carbon tetrachloride, thioglycolic acid, diterpene, terpinolene, γ-terpinene and α-methylstyrene dimer.

The temperature of the emulsion polymerization may be selected appropriately in accordance with the type of the radical polymerization initiator used. In usual cases, the temperature is 0 to 100°C, and preferably 0 to 60°C. The polymerization mode may be continuous or batchwise. The polymerization reaction may be terminated by the addition of a polymerization terminator.

Examples of the polymerization terminators include amine compounds such as isopropylhydroxylamine, diethylhydroxylamine and hydroxylamine; quinone compounds such as hydroquinone and benzoquinone; and sodium nitrite.

The termination of the polymerization reaction may be followed by the addition of an antioxidant as required. After the termination of the polymerization reaction, the latex obtained is cleaned of the unreacted monomers as required, and the polymer is coagulated by the addition of a coagulant salt such as sodium chloride, calcium chloride or potassium chloride optionally together with an acid such as nitric acid or sulfuric acid to control the pH of the coagulated system to a predetermined value. The dispersion medium is then separated, thereby recovering the polymer as crumb. The crumb is washed with water, then dehydrated, and dried with a band dryer or the like to give E-SBR. During the coagulation process, the latex may be mixed together with an emulsified dispersion of an extender oil as required, and the rubber may be recovered as an oil-extended rubber. It is noted that an extender oil is not regarded as a component of the solid rubber (A) in the tire rubber composition in the present specification.

Examples of the commercially available E-SBRs include oil-extended styrene butadiene rubber "JSR1723" manufactured by JSR Corporation.

(ii) Solution-polymerized styrene butadiene rubbers (S-SBRs)

S-SBR may be produced by a usual solution polymerization process. For example, styrene and butadiene are polymerized in a solvent with an active metal capable of catalyzing anionic polymerization optionally in the presence of a polar compound as desired.

Examples of the active metals capable of catalyzing anionic polymerization include alkali metals such as lithium, sodium and potassium; alkaline earth metals such as beryllium, magnesium, calcium, strontium and barium; and lanthanoid rare earth metals such as lanthanum and neodymium. In particular, alkali metals and alkaline earth metals are preferable, and alkali metals are more preferable. Further, compounds having alkali metals as active metals may be used, and organoalkali metal compounds may be more preferably used.

Examples of the solvents include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene and toluene. It is preferable to use the solvent in such an amount that the monomer concentration will be 1 to 50 mass%.

Examples of the organoalkali metal compounds include organomonolithium compounds such as n-butyllithium, sec-butyllithium, t-butyllithium, hexyllithium, phenyllithium and stilbenelithium; polyfunctional organolithium compounds such as dilithiomethane, 1,4-dilithiobutane, 1,4-dilithio-2-ethylcyclohexane and 1,3,5-trilithiobenzene; sodium naphthalene and potassium naphthalene. In particular, organolithium compounds are preferable, and organomonolithium compounds are more preferable. The amount in which the organoalkali metal compounds are used may be determined appropriately in accordance with the desired molecular weight of S-SBR.

The organoalkali metal compound may be used in the form of an organoalkali metal amide by being subjected to a reaction with a secondary amine such as dibutylamine, dihexylamine or dibenzylamine.

The polar compounds are not particularly limited as long as the compounds do not deactivate the anionic polymerization reaction and are generally used for the purposes of controlling the microstructure of butadiene units and controlling the distribution of styrene in polymer chains. Examples include ether compounds such as dibutyl ether, tetrahydrofuran and ethylene glycol diethyl ether; tertiary amines such as N,N,N',N'-tetramethylethylenediamine and trimethylamine; alkali metal alkoxides; and phosphine compounds.

The temperature of the polymerization reaction is usually in the range of -80 to 150°C, preferably 0 to 100°C, and more preferably 30 to 90°C. The polymerization may be batchwise polymerization or continuous polymerization. To enhance the random copolymerizability of styrene and butadiene, it is preferable to supply styrene and butadiene into the reaction liquid continuously or intermittently so that styrene and butadiene in the polymerization system will have a specific composition ratio.

The polymerization reaction may be terminated by the addition of an alcohol such as methanol or isopropanol as a polymerization terminator. Before the addition of the polymerization terminator, an agent capable of reacting with active ends of the polymer may be added, with examples including coupling agents such as tin tetrachloride, tetrachlorosilane, tetramethoxysilane, tetraglycidyl-1,3-bisaminomethylcyclohexane and 2,4-tolylene diisocyanate, and chain

end-modifying agents such as 4,4'-bis(diethylamino)benzophenone and N-vinylpyrrolidone. After the termination of the polymerization reaction, the target S-SBR may be recovered by separating the solvent from the polymerization solution by a method such as direct drying or steam stripping. The polymerization solution may be mixed together with an extender oil before the removal of the solvent, and the rubber may be recovered as an oil-extended rubber.

(iii) Modified styrene butadiene rubbers (modified SBRs)

In the present invention, a modified SBR obtained by introducing a functional group into SBR may be used. Examples of the functional groups include amino groups, alkoxysilyl groups, hydroxyl groups, epoxy groups and carboxyl groups.

For example, the modified SBR may be produced by adding, before the addition of the polymerization terminator, an agent capable of reacting with active ends of the polymer, for example, a coupling agent such as tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane or 2,4-tolylene diisocyanate, a chain end-modifying agent such as 4,4'-bis(diethylamino)benzophenone or N-vinylpyrrolidone, or any of the modifying agents described in JP-A-2011-132298.

In the modified SBR, the functional groups may be introduced at polymer ends or polymer side chains.

The solid rubbers (A) used in the invention may include two or more kinds of SBRs each having a styrene content of not less than 20 mass%, or may be a mixture of SBR with 20 mass% or more styrene content and at least one selected from SBRs with less than 20 mass% styrene content, other synthetic rubbers and natural rubbers.

[Synthetic rubbers other than SBRs]

Some preferred synthetic rubbers other than styrene butadiene rubbers which may be used as the solid rubbers (A) are butadiene rubbers, isoprene rubbers, butyl rubbers, halogenated butyl rubbers, ethylene propylene diene rubbers, butadiene acrylonitrile polymer rubbers and chloroprene rubbers. In particular, isoprene rubbers and butadiene rubbers are more preferable. These rubbers may be used singly, or two or more may be used in combination.

(Isoprene rubbers)

Examples of the isoprene rubbers which may be used include commercially available isoprene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to the S-SBRs. Ziegler-catalyzed isoprene rubbers are preferable because they have a high cis content. Use may be made of ultrahigh cis isoprene rubbers obtained using lanthanoid rare earth metal catalysts.

The vinyl content in the isoprene rubbers is preferably not more than 50 mass%, more preferably not more than 40 mass%, and still more preferably not more than 30 mass%. If the vinyl content exceeds 50 mass%, the rolling resistance performance (low fuel consumption performance) tends to deteriorate. The lower limit of the vinyl content is not particularly limited. The glass transition temperature, although variable depending on the vinyl content, is preferably not more than -20°C, and more preferably not more than -30°C.

The weight average molecular weight (Mw) of the isoprene rubbers is preferably 90,000 to 2,000,000, and more preferably 150,000 to 1,500,000. When the weight average molecular weight of the isoprene rubbers is in this range, the tire rubber composition exhibits good processability and high mechanical strength.

The isoprene rubbers may have branched partial structures or polar functional groups that are formed by using polyfunctional modifiers, for example, tin tetrachloride, silicon tetrachloride, alkoxysilanes having an epoxy group in the molecule, or amino group-containing alkoxysilanes.

(Butadiene rubbers)

Examples of the butadiene rubbers which may be used include commercially available butadiene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to the S-SBRs. Ziegler-catalyzed butadiene rubbers are preferable because they have a high cis content. Use may be made of ultrahigh cis butadiene rubbers (for example, 95% or more cis content) obtained using lanthanoid rare earth metal catalysts.

The vinyl content in the butadiene rubbers is preferably not more than 50 mass%, more preferably not more

than 40 mass%, and still more preferably not more than 30 mass%. If the vinyl content exceeds 50 mass%, the rolling resistance performance tends to deteriorate. The lower limit of the vinyl content is not particularly limited. The glass transition temperature, although variable depending on the vinyl content, is preferably not more than -40°C, and more preferably not more than -50°C.

The weight average molecular weight (Mw) of the butadiene rubbers is preferably 90,000 to 2,000,000, and more preferably 150,000 to 1,500,000. When the weight average molecular weight (Mw) of the butadiene rubbers is in this range, the tire rubber composition attains enhanced processability, and tires including the tire rubber composition as a portion thereof achieve enhancements in abrasion resistance and dry grip performance.

The butadiene rubbers may have branched partial structures or polar functional groups that are formed by using polyfunctional modifiers, for example, tin tetrachloride, silicon tetrachloride, alkoxysilanes having an epoxy group in the molecule, or amino group-containing alkoxysilanes.

The SBR may be used together with one, or two or more of, for example, butyl rubbers, halogenated butyl rubbers, ethylene propylene diene rubbers, butadiene acrylonitrile polymer rubbers and chloroprene rubbers. These rubbers may be produced by any methods without limitation, or may be purchased from the market.

[Natural rubbers]

Examples of the natural rubbers for use as the solid rubbers (A) include those natural rubbers, high-purity natural rubbers and modified natural rubbers such as epoxidized natural rubbers, hydroxylated natural rubbers, hydrogenated natural rubbers and grafted natural rubbers generally used in the tire industry, with specific examples including TSRs (technically specified rubbers) such as SMRs (TSRs from Malaysia), SIRs (TSRs from Indonesia) and STRs (TSRs from Thailand), and RSSs (ribbed smoked sheets). In particular, SMR 20, STR 20 and RSS #3 are preferable from the points of view of uniform quality and high availability. These rubbers may be used singly, or two or more may be used in combination.

In the present invention, the solid rubber (A) described hereinabove is used in combination with the modified liquid diene rubber (B) and the filler (C) which will be described later. This combined use results in enhancements in the strength of tires partially including the tire rubber composition.

In the present invention, the content of the solid rubber (A) in the tire rubber composition is preferably not less than 25 mass%, more preferably not less than 30 mass%, still more preferably not less than 35 mass%, and further preferably not less than 45 mass%, and is preferably not more than 80 mass%, more preferably not more than 75 mass%, still more preferably not more than 70 mass%, further preferably not more than 65 mass%, and particularly preferably not more than 60 mass%. When the content of the solid rubber (A) in the tire rubber composition is in this range, tires including the tire rubber composition as a portion thereof attain enhanced abrasion resistance.

[Modified liquid diene rubbers (B)]

The modified liquid diene rubber (B) used in the inventive tire rubber composition is a liquid polymer which has a weight average molecular weight (Mw) in the range of 15,000 to 120,000, has a vinyl content of not more than 70 mol%, and has a functional group derived from a silane compound represented by the aforementioned formula (1). In the rubber composition of the present invention, the modified liquid diene rubber (B) probably allows the components such as the filler (C) to be dispersed in the rubber composition in a state that is ideal for an article such as a tire tread to exhibit enhanced properties (for example, enhanced abrasion resistance and enhanced steering stability). Although detailed mechanisms are not clear, it is probable that the modified liquid diene rubber (B) in the rubber composition has high reactivity with the filler (C) described later and easily bonds to the filler (C) to reduce the occurrence of aggregation of the filler (C), and allows the filler (C) to attain enhanced dispersibility in the rubber composition, thus contributing to properties enhancements of articles such as tire treads including the rubber composition. Furthermore, the modified liquid diene rubber (B) will be highly entangled with the solid rubber so that crosslinked products obtained from the rubber composition attain excellent mechanical strength such as abrasion resistance.

An unmodified liquid diene rubber (B') that is a raw material for the modified liquid diene rubber (B) contains conjugated diene units as monomer units constituting the polymer. Examples of the conjugated dienes include butadiene; isoprene; and conjugated dienes (b1) except butadiene and isoprene, such as 2,3-dimethylbutadiene, 2-phenylbutadierie, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene and chloroprene. The conjugated diene units in the unmodified liquid diene rubber (B') preferably include monomer units derived from butadiene and/or isoprene.

The unmodified liquid diene rubber (B') serving as a raw material for the modified liquid diene rubber (B) preferably contains monomer units derived from butadiene and/or isoprene in an amount of not less than 50 mass% relative to all the monomer units constituting the polymer. The total content of butadiene units and isoprene units is preferably 60 to 100 mass%, and more preferably 70 to 100 mass% relative to all the monomer units forming the

unmodified liquid diene rubber (B').

In addition to the butadiene units and the isoprene units, the unmodified liquid diene rubber (B') may include additional monomer units such as units from the aforementioned conjugated dienes (b1) other than butadiene and isoprene, and units from aromatic vinyl compounds (b2).

Examples of the aromatic vinyl compounds (b2) include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene and divinylbenzene. Of these aromatic vinyl compounds, styrene, α-methylstyrene and 4-methylstyrene are preferable.

In the unmodified liquid diene rubber (B'), the content of the additional monomer units other than the butadiene and isoprene units is preferably not more than 50 mass%, more preferably not more than 40 mass%, and still more preferably not more than 30 mass% . When, for example, the content of vinyl aromatic compound (b2) units is within the above range, the processability of the rubber composition tends to be enhanced.

The unmodified liquid diene rubber (B') is preferably a polymer obtained by polymerizing a conjugated diene and optionally additional monomers other than conjugated dienes by a process such as, for example, emulsion polymerization or solution polymerization.

The emulsion polymerization process may be a known process or a process that is deemed as known. For example, monomers including a prescribed amount of the conjugated diene may be emulsified and dispersed in the presence of an emulsifier and may be emulsion polymerized with use of a radical polymerization initiator.

Examples of the emulsifiers include long-chain fatty acid salts having 10 or more carbon atoms, and rosin acid salts. Examples of the long-chain fatty acid salts include potassium salts and sodium salts of fatty acids such as capric acid, lauric acid, myristic acid, palmitic acid, oleic acid and stearic acid.

Usually, water is used as the dispersion medium. The dispersion medium may include a water-soluble organic solvent such as methanol or ethanol as long as the stability during the polymerization is not impaired.

Examples of the radical polymerization initiators include persulfate salts such as ammonium persulfate and potassium persulfate, organic peroxides and hydrogen peroxide.

To control the molecular weight of the obtainable unmodified liquid diene rubber (B'), a chain transfer agent may be used. Examples of the chain transfer agents include mercaptans such as t-dodecylmercaptan and n-dodecylmercaptan; carbon tetrachloride, thioglycolic acid, diterpene, terpinolene, γ-terpinene and α-methylstyrene dimer.

The temperature of the emulsion polymerization may be selected appropriately in accordance with, for example, the type of the radical polymerization initiator used. The temperature is usually in the range of 0 to 100°C, and preferably in the range of 0 to 60°C. The polymerization mode may be continuous or batchwise.

The polymerization reaction may be terminated by the addition of a polymerization terminator. Examples of the polymerization terminators include amine compounds such as isopropylhydroxylamine, diethylhydroxylamine and hydroxylamine, quinone compounds such as hydroquinone and benzoquinone, and sodium nitrite.

The termination of the polymerization reaction may be followed by the addition of an antioxidant as required. After the termination of the polymerization reaction, the latex obtained is cleaned of the unreacted monomers as required, and the unmodified liquid diene rubber (B') is coagulated by the addition of a coagulant salt such as sodium chloride, calcium chloride or potassium chloride optionally together with an acid such as nitric acid or sulfuric acid to control the pH of the coagulated system to a predetermined value. The dispersion medium is then separated, thereby recovering the polymer. Next, the polymer is washed with water, dehydrated and dried. In this manner, the unmodified liquid diene rubber (B') may be obtained. During the coagulation process, the latex may be mixed together with an emulsified dispersion of an extender oil as required, and the unmodified liquid diene rubber (B') may be recovered as an oil-extended rubber.

The solution polymerization process may be a known process or a process that is deemed as known. For example, monomers including the conjugated diene are polymerized in a solvent with a Ziegler catalyst, a metallocene catalyst or an active metal or an active metal compound capable of catalyzing anionic polymerization, optionally in the presence of a polar compound as desired.

Examples of the solvents include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene, toluene and xylene.

Examples of the active metals capable of catalyzing anionic polymerization include alkali metals such as lithium, sodium and potassium; alkaline earth metals such as beryllium, magnesium, calcium, strontium and barium; and lanthanoid rare earth metals such as lanthanum and neodymium. Of the active metals capable of catalyzing anionic polymerization, alkali metals and alkaline earth metals are preferable, and alkali metals are more preferable.

Preferred active metal compounds capable of catalyzing anionic polymerization are organoalkali metal compounds. Examples of the organoalkali metal compounds include organomonolithium compounds such as methyllithium,

ethyllithium, n-butyllithium, sec-butyllithium, t-butyllithium, hexyllithium, phenyllithium and stilbenelithium; polyfunctional organolithium compounds such as dilithiomethane, dilithionaphthalene, 1,4-dilithiobutane, 1,4-dilithio-2-ethylcyclohexane and 1,3,5-trilithiobenzene; sodium naphthalene and potassium naphthalene. Of these organoalkali metal compounds, organolithium compounds are preferable, and organomonolithium compounds are more preferable.

The amount in which the organoalkali metal compounds are used may be determined appropriately in accordance with factors such as the melt viscosities and molecular weights of the unmodified liquid diene rubber (B') and the modified liquid diene rubber (B). Usually, the amount of such compounds is 0.01 to 3 parts by mass per 100 parts by mass of all the monomers including the conjugated diene.

The organoalkali metal compound may be used in the form of an organoalkali metal amide by being subjected to a reaction with a secondary amine such as dibutylamine, dihexylamine or dibenzylamine.

The polar compounds are usually used in the anionic polymerization for the purpose of controlling the microstructure (for example, the vinyl content) of conjugated diene units without deactivating the reaction. Examples of the polar compounds include ether compounds such as dibutyl ether, tetrahydrofuran and ethylene glycol diethyl ether; tertiary amines such as N,N,N',N'-tetramethylethylenediamine and trimethylamine; alkali metal alkoxides and phosphine compounds. The polar compounds are usually used in an amount of 0.01 to 1000 mol per mol of the organoalkali metal compound.

The temperature of the solution polymerization is usually in the range of -80 to 150°C, preferably 0 to 100°C, and more preferably 10 to 90°C. The polymerization mode may be batchwise or continuous.

The polymerization reaction may be terminated by the addition of a polymerization terminator. Examples of the polymerization terminators include alcohols such as methanol and isopropanol. The unmodified liquid diene rubber (B') may be isolated by pouring the polymerization reaction liquid into a poor solvent such as methanol to precipitate the unmodified liquid diene rubber (B'), or by washing the polymerization reaction liquid with water followed by separation and drying.

Of the processes described above for the production of the unmodified liquid diene rubber (B'), the solution polymerization process is preferable.

The unmodified liquid diene rubber (B') obtained as described above may be directly (without hydrogenation) subjected to the modification with functional groups derived from a silane compound represented by the formula (1) described later, or may be modified after at least part of the unsaturated bonds present in the liquid diene rubber are hydrogenated.

To ensure that the functional groups derived from a silane compound represented by the formula (1) described later will exhibit their characteristics more favorably, the unmodified liquid diene rubber (B') is preferably free from modification with other functional groups (such as, for example, hydroxyl groups) . When the unmodified liquid diene rubber (B') is free from modification with functional groups, the modified liquid diene rubber (B) that is obtained tends to attain higher stability. Further, the modified liquid diene rubber (B) that is obtained tends to exhibit higher interaction (for example, reactivity) between its functional groups derived from a silane compound represented by the formula (1) and the filler (C) (for example, silica).

The unmodified liquid diene rubber (B') is modified with a functional group derived from a silane compound represented by the formula (1) below (hereinafter, also written as the silane compound (1)) into the modified liquid diene rubber (B) .

[Chem. 2]

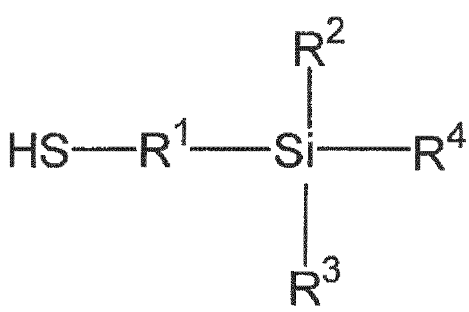

(1)

In the formula (1), $R^1$ is a $C_{1-6}$ divalent alkylene group. Examples of the $C_{1-6}$ divalent alkylene groups include methylene group, ethylene group, propylene group, butylene group, pentylene group and hexylene group. $R^2$, $R^3$ and $R^4$ are each independently a methoxy group, an ethoxy group, a phenoxy group, a methyl group, an ethyl group or a phenyl group, with the proviso that at least one of $R^2$, $R^3$ and $R^4$ is a methoxy group, an ethoxy group or a phenoxy group.

Examples of the silane compounds (1) include mercaptomethylenemethyldiethoxysilane, mercaptomethylenetriethoxysilane, 2-mercaptoethyltrimethoxysilane, 2-mercaptoethyltriethoxysilane, 2-mercaptoethylmethoxydimethylsilane, 2-mercaptoethylethcxydimethylsilane, 3-mercaptopropyltrimethoxysilane, 3-mercaptopropyltriethoxysilane, 3-mercaptopropyldimethoxymethylsilane, 3-mercaptopropyldiethoxymethylsilane, 3-mercaptopropyldimethoxyethylsilane, 3-mercaptopropyldiethoxyethylsilane, 3-mercaptopropylmethoxydimethylsilane and 3-mercaptopropylethoxydimethylsilane. The silane compounds may be used singly, or two or more may be used in combination.

The mercapto group (-SH) of the silane compound (1) is radically added to a carbon-carbon unsaturated bond present in the unmodified liquid diene rubber (B'). The resultant modified liquid diene rubber (B) has the functional group derived from the silane compound (1), specifically, a functional group that is the partial structure represented by the following formula (2):

[Chem. 3]

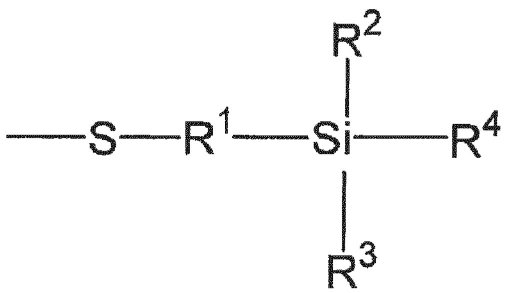

(2)

Details such as definitions and specific examples of $R^1$, $R^2$, $R^3$ and $R^4$ in the formula (2) are the same as those of $R^1$, $R^2$, $R^3$ and $R^4$ in the formula (1) .

The average number of the functional groups derived from the silane compound (1) per molecule of the modified liquid diene rubber (B) is preferably 1 to 35, more preferably 1 to 30, still more preferably 1 to 25, and further preferably 1 to 20. If the average number of the functional groups is less than 1, the rubber exhibits a low affinity for the filler (C) and fails to improve the dispersibility of the filler in the rubber composition, with the result that tire treads obtained from the rubber composition cannot sometimes attain the desired enhancements in properties, for example, abrasion resistance and steering stability. If, on the other hand, the average number of the functional groups is more than 35, tire treads or the like which are obtained from the rubber composition do not attain the desired properties enhancements and tend to be deteriorated in properties, for example, in abrasion resistance and steering stability.

The average number of the functional groups per molecule of the modified liquid diene rubber (B) may be calculated from the functional group equivalent weight (g/eq) and the polystyrene equivalent number average molecular weight Mn measured by GPC of the modified liquid diene rubber (B).

(Average number of functional groups per molecule) = [(Number average molecular weight Mn)/(Molecular weight of styrene unit) × (Average molecular weight of units of conjugated diene and optional monomers other than conjugated dienes)]/(Functional group equivalent weight)

The functional group equivalent weight of the modified liquid diene rubber (B) indicates the mass of butadiene and optional monomers other than butadiene that are bonded together per one functional group. The functional group equivalent weight may be calculated from the ratio of the area of the peak assigned to the polymer main chains to the area of the peak assigned to the functional groups using $^1$H-NMR or $^{13}$C-NMR. The peak assigned to the functional groups is a peak assigned to alkoxy groups.

The amount of the silane compound (1) added in the modified liquid diene rubber (B) is preferably 1 to 60 parts by mass per 100 parts by mass of the unmodified liquid diene rubber (B'), and is more preferably 1 to 50 parts by mass,

and still more preferably 1 to 40 parts by mass. If the amount of the modifying agent added is larger than 60 parts by mass, the modified liquid diene rubber tends to be low in the reactivity with the filler (C) and to be poorly effective in enhancing the dispersibility of the filler (C), and a tire tread that is obtained tends to be low in abrasion resistance. If the amount is less than 1 part by mass, the dispersibility of the filler (C) tends not to be effectively improved and the components such as the filler (C) tend not to be allowed to be dispersed in a state that is ideal for a tire tread to attain enhanced properties. The amount of the silane compound (1) added in the modified liquid diene rubber (B) may be determined with various analyzers such as, for example, a nuclear magnetic resonance spectrometer.

The silane compound (1) may be added to the unmodified liquid diene rubber (B') by any method without limitation. For example, the silane compound (1) and optionally a radical catalyst as required may be added to the liquid diene rubber and the mixture may be heated in the presence of or without an organic solvent. The radical generator that is used is not particularly limited and may be any of, among others, organic peroxides, azo compounds and hydrogen peroxide that are usually available in the market. It is undesirable that the reaction which adds the silane compound (1) to the unmodified liquid diene rubber (B') be performed by heating alone without using a radical generator. If, for example, the heating temperature is excessively low, the addition reaction does not take place sufficiently and the average number of the functional groups per molecule does not sometimes reach the desired range. When the heating temperature is high, the addition reaction can proceed but is sometimes accompanied by the generation of radicals on the polymer main chains and the consequent molecular weight-increasing reaction of the polymer, with the result that the Mw of the modified liquid diene rubber does not sometimes fall in the desired range or the viscosity of the modified liquid diene rubber does not sometimes fall in the desired range. In the case where the modified liquid diene rubber is obtained by addition reaction at a high temperature, the rubber is sometimes poorly handleable, and adverse effects may be caused on properties of the tire rubber composition that is obtained. By using a radical generator in the addition reaction, the addition reaction is allowed to proceed to a sufficient extent even at a relatively low temperature while sufficiently suppressing side reactions such as molecular weight-increasing reaction.

Provided that the total area of peaks assigned to polymer components in a GPC chromatogram obtained by GPC measurement of the modified liquid diene rubber (B) is 100%, the proportion of polymer components having a molecular weight of Mt $\times$ 1.45 or above is preferably in the range of 0 to 30%, more preferably in the range of 0 to 25%, still more preferably in the range of 0 to 20%, and particularly preferably in the range of 0 to 18% wherein Mt is the peak-top molecular weight of the modified liquid diene rubber (B) measured by GPC relative to polystyrenes. The incorporation of such a modified liquid diene rubber (B) results in good processability of the rubber composition. Further, such a modified liquid diene rubber exhibits enhanced affinity for the filler (C) described later in the obtainable rubber composition and thus can be easily present near the filler (C) during the preparation of the rubber composition. Probably as a result of these, the components such as the filler (C) are allowed to be dispersed in the rubber composition in a state that is ideal for a crosslinked product to attain enhanced properties (for example, concurrent satisfaction of dry grip performance and wet grip performance). Further, the facilitated access of the modified liquid diene rubber (B) to the vicinity of the filler (C) leads to excellent abrasion resistance of crosslinked products that are obtained.

Examples of the organic peroxides include methyl ethyl ketone peroxide, cyclohexanone peroxide, 3,3,5-trimethylcyclohexanone peroxide, methylcyclohexanone peroxide, acetylacetone peroxide, 1,1-bis(t-butylperoxy)-3,3,5-trimethylcyclohexane, 1,1-bis(t-butylperoxy)cyclohexane, 1,1-bis(t-hexylperoxy)cyclohexane, 2,2-bis(t-butylperoxy)butane, t-butylhydroperoxide, cumenehydroperoxide, diisopropylbenzene hydroperoxide, p-menthane hydroperoxide, 2,5-dimethylhexane 2,5-dihydroperoxide, 1,1,3,3-tetramethylbutyl hydroperoxide, di-t-butyl peroxide, t-butylcumyl peroxide, dicumyl peroxide, bis(t-butylperoxyisopropyl)benzene, 2,5-dimethyl-2,5-di(t-butylperoxy)hexane, 2,5-hexanoyl peroxide, lauroyl peroxide, succinic acid peroxide, benzoyl peroxide and derivatives thereof, 2,4-dichlorobenzoyl peroxide, m-toluoyl peroxide, diisopropyl peroxydicarbonate, t-butyl-2-ethyl hexanoate, di-2-ethylhexyl peroxydicarbonate, dimethoxyisopropyl peroxycarbonate, di(3-methyl-3-methoxybutyl) peroxydicarbonate, t-butyl peroxyacetate, t-butyl peroxypivalate, t-butyl peroxyneodecanoate, t-butyl peroxyoctanoate, t-butyl peroxy-3,3,5-trimethylhexanoate, t-butyl peroxylaurate, t-butyl peroxycarbonate, t-butyl peroxybenzoate and t-butyl peroxyisobutyrate.

Examples of the azo compounds include 2,2'-azobisisobutyronitrile, 1,1'-azobis(cyclohexane-1-carbonitrile), 2,2'-azobis(2-methylbutyronitrile), 2,2'-azobis(2,4-dimethylvaleronitrile), 2,2'-azobis(2,4-dimethyl-4-methoxyvaleronitrile), 2,2'-azobis(2-(2-imidazolin-2-yl)propane), 2,2'-azobis(2,4,4-trimethylpentane), 2,2'-azobis(2-methylpropane), 2,2'-azobis(2-hydroxymethylpropionitrile), 4,4'-azobis(4-cyanovaleric acid), dimethyl 2,2'-azobis(2-methylpropionate), 2-cyano-2-propylazoformamide and 2-phenylazo-4-methoxy-2,4-dimethylvaleronitrile.

For example, the organic solvent used in the above method is usually a hydrocarbon solvent or a halogenated hydrocarbon solvent. Of these organic solvents, hydrocarbon solvents such as n-butane, n-hexane, n-heptane, cyclohexane, benzene, toluene and xylene are preferable.

For purposes such as to suppress side reactions during the addition reaction of the modifying agent by the aforementioned method, an antioxidant may be added.

Some preferred examples of the antioxidants used for such purposes include 2,6-di-t-butyl-4-methylphenol (BHT), 2,2'-methylenebis(4-methyl-6-t-butylphenol), 4,4'-thiobis(3-methyl-6-t-butylphenol), 4,4'-butylidenebis(3-methyl-6-t-butylphenol) (AO-40), 3,9-bis[1,1-dimethyl-2-[3-(3-t-butyl-4-hydroxy-5-methylphe nyl)propionyloxy]ethyl]-2,4,8,10-tetraoxaspiro[5.5]undecan e (A0-80), 2,4-bis[(octylthio)methyl]-6-methylphenol (Irganox 1520L), 2,4-bis[(dodecylthio)methyl]-6-methylphenol (Irganox 1726), 2-[1-(2-hydroxy-3,5-di-t-pentylphenyl)ethyl]-4,6-di-t-pent ylphenyl acrylate (Sumilizer GS), 2-t-butyl-6-(3-t-butyl-2-hydroxy-5-methylbenzyl)-4-methylp henyl acrylate (Sumilizer GM), 6-t-butyl-4-[3-(2,4,8,10-tetra-t-butyldibenzo[d,f][1,3,2]d ioxaphosphepin-6-yloxy)propyl]-2-methylphenol (Sumilizer GP), tris(2,4-di-t-butylphenyl) phosphite (Irgafos 168), dioctadecyl 3,3'-dithiobispropionate, hydroquinone, p-methoxyphenol, N-phenyl-N'-(1,3-dimethylbutyl)-p-phenylenediamine (Nocrac 6C), bis(2,2,6,6-tetramethyl-4-piperidyl) sebacate (LA-77Y), N,N-dioctadecylhydroxylamine (Irgastab FS 042) and bis(4-t-octylphenyl)amine (Irganox 5057). The antioxidants may be used singly, or two or more may be used in combination.

The amount of the antioxidants added is preferably 0 to 10 parts by mass, and more preferably 0 to 5 parts by mass per 100 parts by mass of the unmodified liquid diene rubber (B').

In the modified liquid diene rubber (B), the functional groups may be introduced at polymer ends or polymer side chains . The introduction sites are preferably polymer side chains in view of the fact that a plurality of functional groups can be introduced easily. The functional groups may belong to a single kind or may be a mixture of two or more kinds. That is, the modified liquid diene rubber (B) may be modified with a single kind of the modifying agent or with two or more kinds of the modifying agents.

The ratio in which the unmodified liquid diene rubber (B') and the silane compound (1) are mixed together may be selected appropriately so that, for example, the modified liquid diene rubber (B) will have the desired average number of the functional groups per molecule. For example, the unmodified liquid diene rubber (B') and the silane compound (1) may be mixed in a mass ratio (B')/(1) of 0.3 to 300, and may be mixed in a mass ratio (B')/(1) of, for example, 1 to 100.

An effective approach to producing the modified liquid diene rubber (B) with the specified properties is to react the unmodified diene rubber with the silane compound (1) by radical addition reaction at an appropriate reaction temperature for a sufficient amount of reaction time. For example, the addition reaction of the silane compound (1) to the unmodified liquid diene rubber (B') preferably takes place at a temperature of 10 to 200°C, more preferably 50°C to 180°C, and still more preferably 50°C to 140°C. The reaction time is preferably 1 to 200 hours, more preferably 1 to 100 hours, still more preferably 1 to 50 hours, and further preferably 1 to 25 hours.

The melt viscosity of the modified liquid diene rubber (B) at 38°C is preferably 1 to 4,000 Pa·s, more preferably 1 to 3,500 Pa·s, still more preferably 1 to 3,000 Pa·s, further preferably 1 to 2,000 Pa·s, and particularly preferably 1 to 1,000 Pa·s. When the melt viscosity of the modified liquid diene rubber (B) is in the above range, the rubber composition that is obtained attains enhanced flexibility and thus exhibits higher processability. The modified liquid diene rubber (B) having this specific melt viscosity may be effectively synthesized by adding a radical catalyst during the modification reaction and performing the reaction at a low reaction temperature for a short time. In the present invention, the melt viscosity of the modified liquid diene rubber (B) is a value measured with a Brookfield viscometer at 38°C.

The weight average molecular weight (Mw) of the modified liquid diene rubber (B) is 15,000 to 120,000, preferably 15,000 to 100,000, more preferably 15,000 to 80,000, and still more preferably 15,000 to 60,000. In the invention, the Mw of the modified liquid diene rubber (B) is the weight average molecular weight measured by gel permeation chromatography (GPC) relative to polystyrenes. The above range of the Mw of the modified liquid diene rubber (B) ensures that the process flow efficiency during production is enhanced and good economic efficiency is obtained, and that the rubber composition of the invention attains good processability. Further, such a modified liquid diene rubber attains enhanced affinity for the filler (C) described later in the obtainable rubber composition and thus can be located more easily near the filler (C) during the preparation of the rubber composition. As a result, the rubber will contribute to an enhancement in the dispersibility of the filler (C). Thus, in a tire tread obtained from the composition or the like, the components such as the filler (C) are allowed to be dispersed in a state that is ideal for the crosslinked product to attain enhanced properties. Further, as a result of the facilitated access of the modified liquid diene rubber (B) to the vicinity of the filler (C), tire treads or the like with excellent abrasion resistance are obtained. By virtue of these advantages, articles such as tire treads obtained from the composition exhibit excellent properties, for example, steering stability. In the present invention, two or more kinds of the modified liquid diene rubbers (B) having different molecular weights Mw may be used in combination.

The molecular weight distribution (Mw/Mn) of the modified liquid diene rubber (B) is preferably 1.0 to 20.0, more preferably 1.0 to 15.0, and still more preferably 1.0 to 10.0. This Mw/Mn is advantageous in that the obtainable modified liquid diene rubber (B) has a small variation in viscosity. The molecular weight distribution (Mw/Mn) is the ratio of weight average molecular weight (Mw) to number average molecular weight (Mn) measured by GPC relative to polystyrene standards.

The vinyl content in the modified liquid diene rubber (B) is not more than 70 mol%, and preferably not more than 65 mol%. The vinyl content in the modified liquid diene rubber (B) is preferably not less than 0.5 mol%, and more preferably not less than 1 mol%. In the present invention, the "vinyl content" means the total molar percentage of 1,2-bonded or 3,4-bonded conjugated diene units (conjugated diene units except 1,4-bonded conjugated diene units) relative to the total of isoprene units, butadiene units and conjugated diene (b1) units other than isoprene and butadiene units

in the modified liquid diene rubber taken as 100 mol%. The vinyl content may be determined by $^1$H-NMR based on the area ratio of the peaks assigned to 1,2-bonded or 3,4-bonded conjugated diene units and the peak assigned to 1,4-bonded conjugated diene units.

If the vinyl content is above 70 mol%, the modified liquid diene rubber (B) comes to exhibit a poor compatibility with the solid rubber (A) and consequently the filler (C) is caused to be dispersed in the rubber composition in a state that is not ideal for articles that are obtained, such as tire treads, to attain enhanced properties. Consequently, for example, properties such as steering stability tend to be deteriorated. Further, the abrasion resistance and low fuel consumption performance of tire treads or the like that are obtained tend to be deteriorated.

The vinyl content in the modified liquid diene rubber (B) may be brought to the desired value by, for example, selecting the types of a solvent and an optional polar compound used in the production of the unmodified liquid diene rubber (B'), or controlling the production conditions such as polymerization temperature.

The glass transition temperature (Tg) of the modified liquid diene rubber (B) is variable depending on factors such as the vinyl content in the isoprene units, butadiene units and conjugated diene (b1) units, the type of the conjugated diene (b1) and the content of units derived from monomers other than the conjugated dienes, but is preferably -150 to 50°C, more preferably -130 to 50°C, and still more preferably -130 to 30°C. For example, this Tg ensures that a crosslinked product of the rubber composition gives a tire having good rolling resistance performance, and further ensures that the increase in viscosity is suppressed and the material can be handled easily.

The modified liquid diene rubbers (B) may be used singly, or two or more may be used in combination.

In the modified liquid diene rubber (B), the catalyst residue content ascribed to the polymerization catalyst used in the production of the rubber is preferably in the range of 0 to 200 ppm in terms of metal. When, for example, the polymerization catalyst used for the production of the unmodified liquid diene rubber (B'), which is the raw material for the modified liquid diene rubber (B), is an organoalkali metal such as an organolithium compound, the metal based on which the catalyst residue content is determined is the alkali metal such as lithium. The catalyst residue content in the above range ensures that a decrease in tackiness during processing or the like will be avoided and that the rubber composition of the invention will give crosslinked products attaining enhancements in heat resistance and rolling resistance performance of tires. The catalyst residue content ascribed to the polymerization catalyst used in the production of the modified liquid diene rubber (B) is more preferably 0 to 150 ppm, and still more preferably 0 to 100 ppm in terms of metal. The catalyst residue content may be measured with, for example, a polarized Zeeman atomic absorption spectrophotometer.

For example, the catalyst residue content in the liquid diene rubber may be controlled to the above specific range by purifying the modified liquid diene rubber (B) or the unmodified liquid diene rubber (B') as the raw material to remove sufficiently the catalyst residue. The purification method is preferably washing with water or warm water, an organic solvent such as methanol or acetone, or supercritical fluid carbon dioxide. From the economic viewpoint, the number of washing operations is preferably 1 to 20 times, and more preferably 1 to 10 times. The washing temperature is preferably 20 to 100°C, and more preferably 40 to 90°C. Prior to the polymerization reaction, the monomers may be purified by distillation or with an adsorbent to remove impurities that will inhibit the polymerization. Such purification allows the polymerization to take place with a reduced amount of the polymerization catalyst, thus making it possible to reduce the catalyst residue content. From the similar viewpoint, the catalyst residue content in the inventive high-grip tire rubber composition including the solid rubber (A), the modified liquid diene rubber (B) and the filler (C) is preferably 0 to 200 ppm, more preferably 0 to 150 ppm, and still more preferably 0 to 100 ppm in terms of metal. In this case, the catalyst residue content may include a catalyst residue content ascribed to the polymerization catalyst used in the production of the solid rubber (A), the modified liquid diene rubber (B) and/or other components optionally used in the high-grip tire rubber composition.

In the rubber composition of the invention, the content of the modified liquid diene rubber (B) is 0.1 to 90 parts by mass per 100 parts by mass of the solid rubber (A), and is preferably 0.1 to 50 parts by mass, more preferably 0.1 to 45 parts by mass, still more preferably 0.5 to 40 parts by mass, further preferably 1 to 40 parts by mass, particularly preferably 2 to 40 parts by mass, and most preferably 2 to 30 parts by mass. The content of the modified liquid diene rubber (B) may be controlled appropriately in accordance with the content of the filler (C). When, for example, the rubber composition contains 20 to 150 parts by mass of silica as the filler (C), the content of the modified liquid diene rubber (B) is preferably 5 to 80 parts by mass. When, for example, the rubber composition contains 25 to 120 parts by mass of carbon black as the filler (C), the content of the modified liquid diene rubber (B) is preferably 5 to 80 parts by mass. The above range of the content of the modified liquid diene rubber (B) ensures that the filler (C) will attain enhanced dispersibility in the rubber composition and that tire treads or the like which are obtained will attain enhancements in abrasion resistance and rolling resistance performance and will also have good properties such as, for example, steering stability.

[Fillers (C)]

The filler (C) used in the tire rubber composition of the invention is not particularly limited and may be any of fillers generally used in tire rubber compositions. For example, to obtain enhanced properties such as mechanical strength and to ensure that tires including the tire rubber composition as portions thereof will attain enhancements in steering stability and low fuel consumption performance, the filler (C) is preferably at least one selected from carbon blacks and silicas.

Examples of the carbon blacks include furnace blacks, channel blacks, thermal blacks, acetylene blacks and Ketjen blacks. From points of view such as enhancing the crosslinking rate, enhancing the mechanical strength of crosslinked products which are obtained, and enhancing the steering stability and low fuel consumption performance of tires including the tire rubber composition as portions thereof, furnace blacks are preferable among the above carbon blacks. The carbon blacks may be used singly, or two or more may be used in combination.

To attain enhancements in steering stability and low fuel consumption performance of tires including the tire rubber composition as portions thereof, the average particle diameter of the carbon blacks is preferably not less than 5 nm, more preferably not less than 10 nm, and still more preferably not less than 15 nm, and is preferably not more than 100 nm, more preferably not more than 80 nm, still more preferably not more than 70 nm, and further preferably not more than 60 nm. The average particle diameter of the carbon blacks may be determined by measuring the diameters of the particles with a transmission electron microscope and calculating the average of the diameters.

Examples of the commercially available furnace blacks include "DIABLACK" manufactured by Mitsubishi Chemical Corporation and "SEAST" manufactured by Tokai Carbon Co., Ltd. Examples of the commercially available acetylene blacks include "DENKA BLACK" manufactured by Denka Company Limited. Examples of the commercially available Ketjen blacks include "ECP600JD" manufactured by Lion Specialty Chemicals Co., Ltd.

To attain enhancements in properties such as the wettability and dispersibility with respect to the solid rubber (A), the carbon blacks may be treated with acids such as nitric acid, sulfuric acid, hydrochloric acid and mixed acids of these acids, or may be subjected to surface oxidation treatment by heating in the presence of air. To enhance the mechanical strength of the inventive tire rubber composition and crosslinked products obtained from the composition, the carbon blacks may be heat treated at 2,000 to 3,000 °C in the presence of a graphitization catalyst. Preferred examples of the graphitization catalysts include boron, boron oxides (for example, $B_2O_2$, $B_2O_3$, $B_4O_3$ and $B_4O_5$), boron oxoacids (for example, orthoboric acid, metaboric acid and tetraboric acid) and salts thereof, boron carbides (for example, $B_4C$ and $B_6C$), boron nitride (BN) and other boron compounds.

The carbon blacks may be used after their grain size is adjusted by a technique such as crushing. Examples of the grinders which may be used for the crushing of the carbon blacks include high-speed rotary crushers (hammer mills, pin mills and cage mills), various ball mills (rotary mills, vibration mills and planetary mills) and stirring mills (bead mills, Attritor mills, flow tube type mills and annular mills).

Examples of the silicas include wet silicas (hydrous silicates), dry silicas (silicic anhydrides), calcium silicates and aluminum silicates. Of these silicas, wet silicas are preferable to attain further enhancements in processability, the mechanical strength and abrasion resistance of crosslinked products which are obtained, and the steering stability and low fuel consumption performance of tires including the tire rubber composition as portions thereof. The silicas may be used singly, or two or more may be used in combination.

To attain enhancements in the processability of the tire rubber composition, and the steering stability and low fuel consumption performance of tires including the tire rubber composition as portions thereof, the average particle diameter of the silicas is preferably not less than 0.5 nm, more preferably not less than 2 nm, still more preferably not less than 5 nm, further preferably not less than 8 nm, and particularly preferably not less than 10 nm, and is preferably not more than 200 nm, more preferably not more than 150 nm, still more preferably not more than 100 nm, further preferably not more than 50 nm, particularly preferably not more than 30 nm, and most preferably not more than 20 nm. The average particle diameter of the silicas may be determined by measuring the diameters of the particles with a transmission electron microscope and calculating the average of the diameters.

Of the carbon blacks and the silicas described above, the silicas are more preferable as the fillers (C) from points of view such as enhancing the rolling resistance performance of the obtainable rubber composition and crosslinked products thereof.

In the present invention, the tire rubber composition may include a filler other than silicas and carbon blacks for purposes such as to enhance the mechanical strength of tires including the tire rubber composition as portions thereof, and to improve production costs by adding the filler as an extender.

Examples of the fillers other than silicas and carbon blacks include organic fillers, and inorganic fillers such as clays, talcs, micas, calcium carbonate, magnesium hydroxide, aluminum hydroxide, barium sulfate, titanium oxides, glass fibers, fibrous fillers and glass balloons. These fillers may be used singly, or two or more may be used in combination.

The amount of the filler (C) is preferably 20 to 150 parts by mass per 100 parts by mass of the solid rubber (A). When the amount of the filler (C) is in this range, tires including the tire rubber composition as portions thereof attain

enhancements in steering stability and low fuel consumption performance. From the above point of view, the amount of the filler (C) per 100 parts by mass of the solid rubber (A) is more preferably not less than 30 parts by mass, and still more preferably not less than 40 parts by mass, and is preferably not more than 140 parts by mass, and more preferably not more than 120 parts by mass.

When the silica is used as the filler (C), the amount of the silica per 100 parts by mass of the solid rubber (A) is preferably not less than 20 parts by mass, more preferably not less than 25 parts by mass, and still more preferably not less than 30 parts by mass, and is preferably not more than 150 parts by mass, more preferably not more than 140 parts by mass, and still more preferably not more than 120 parts by mass from the point of view of enhancing the steering stability and low fuel consumption performance of tires including the tire rubber composition as portions thereof.

When the carbon black is used as the filler (C), the amount of the carbon black per 100 parts by mass of the solid rubber (A) is preferably not less than 25 parts by mass, more preferably not less than 30 parts by mass, and still more preferably not less than 40 parts by mass, and is preferably not more than 120 parts by mass, more preferably not more than 100 parts by mass, and still more preferably not more than 80 parts by mass, from the point of view of enhancing the dry grip performance, wet grip performance and low fuel consumption performance of tires including the tire rubber composition as portions thereof.

When the silica and the carbon black are used in combination, the ratio of the silica to the carbon black (mass ratio = silica/carbon black) is preferably 1/99 to 99/1, more preferably 10/90 to 90/10, and still more preferably 30/70 to 80/20.

[Additional components]

When the tire rubber composition of the invention includes silica or the like as the filler (C), it is preferable that the composition further include a silane coupling agent. Examples of the silane coupling agents include sulfide compounds, mercapto compounds, vinyl compounds, amino compounds, glycidoxy compounds, nitro compounds and chloro compounds.

Examples of the sulfide compounds include bis(3-triethoxysilylpropyl) tetrasulfide, bis(2-triethoxysilylethyl) tetrasulfide, bis(3-trimethoxysilylpropyl) tetrasulfide, bis(2-trimethoxysilylethyl) tetrasulfide, bis(3-triethoxysilylpropyl) trisulfide, bis(3-trimethoxysilylpropyl) trisulfide, bis(3-triethoxysilylpropyl) disulfide, bis(3-trimethoxysilylpropyl) disulfide, 3-trimethoxysilylpropyl-N,N-dimethylthiocarbamoyl tetrasulfide, 3-triethoxysilylpropyl-N,N-dimethylthiocarbamoyl tetrasulfide, 2-trimethoxysilylethyl-N,N-dimethylthiocarbamoyl tetrasulfide, 3-trimethoxysilylpropyl benzothiazole tetrasulfide, 3-triethoxysilylpropyl benzothiazole tetrasulfide, 3-triethoxysilylpropyl methacrylate monosulfide, 3-trimethoxysilylpropyl methacrylate monosulfide and 3-octanoylthio-1-propyltriethoxysilane.

Examples of the mercapto compounds include 3-mercaptopropyltrimethoxysilane, 3-mercaptopropyltriethoxysilane, 2-mercaptoethyltrimethoxysilane and 2-mercaptoethyltriethoxysilane.

Examples of the vinyl compounds include vinyltriethoxysilane and vinyltrimethoxysilane.

Examples of the amino compounds include 3-aminopropyltriethoxysilane, 3-aminopropyltrimethoxysilane, 3-(2-aminoethyl)aminopropyltriethoxysilane and 3-(2-aminoethyl)aminopropyltrimethoxysilane.

Examples of the glycidoxy compounds include γ-glycidoxypropyltriethoxysilane, γ-glycidoxypropyltrimethoxysilane, γ-glycidoxypropylmethyldiethoxysilane and γ-glycidoxypropylmethyldimethoxysilane.

Examples of the nitro compounds include 3-nitropropyltrimethoxysilane and 3-nitropropyltriethoxysilane. Examples of the chloro compounds include 3-chloropropyltrimethoxysilane, 3-chloropropyltriethoxysilane, 2-chloroethyltrimethoxysilane and 2-chloroethyltriethoxysilane.

Other compounds may be also used, with examples including octyltriethoxysilane, methyltriethoxysilane, methyltrimethoxysilane and hexadecyltrimethoxysilane.

The silane coupling agents may be used singly, or two or more may be used in combination. Of the above silane coupling agents, sulfur-containing silane coupling agents such as sulfide compounds and mercapto compounds are preferable because of their high reinforcing effects, and bis(3-triethoxysilylpropyl) disulfide, bis(3-triethoxysilylpropyl) tetrasulfide and 3-mercaptopropyltrimethoxysilane are more preferable.

The silane coupling agent is preferably added in an amount of 0.1 to 30 parts by mass, more preferably 0.5 to 20 parts by mass, and still more preferably 1 to 15 parts by mass per 100 parts by mass of the filler (C). This content of the silane coupling agent ensures that dispersibility, coupling effects, reinforcing effects and abrasion resistance will be enhanced.

The tire rubber composition of the invention may further contain a vulcanizing agent (D) to crosslink the rubber in the composition. Examples of the vulcanizing agents (D) include sulfur and sulfur compounds. Examples of the sulfur compounds include morpholine disulfides and alkylphenol disulfides . The vulcanizing agents (D) may be used singly, or two or more may be used in combination. From the point of view of mechanical properties of crosslinked products, the vulcanizing agent (D) is usually added in an amount of 0.1 to 10 parts by mass, preferably 0.5 to 10 parts by mass, and more preferably 0.8 to 5 parts by mass per 100 parts by mass of the solid rubber (A) .

When, for example, the tire rubber composition of the invention contains the vulcanizing agent (D) for crosslinking (vulcanizing) the rubber, the composition may further include a vulcanization accelerator (E). Examples of the vulcanization accelerators (E) include guanidine compounds, sulfenamide compounds, thiazole compounds, thiuram compounds, thiourea compounds, dithiocarbamic acid compounds, aldehyde-amine compounds, aldehyde-ammonia compounds, imidazoline compounds and xanthate compounds. The vulcanization accelerators (E) may be used singly, or two or more may be used in combination. The vulcanization accelerator (E) is usually added in an amount of 0.1 to 15 parts by mass, and preferably 0.1 to 10 parts by mass per 100 parts by mass of the solid rubber (A).

When, for example, the tire rubber composition of the invention contains sulfur, a sulfur compound or the like as the vulcanizing agent (D) for crosslinking (vulcanizing) the rubber, the composition may further include a vulcanization aid (F). Examples of the vulcanization aids (F) include fatty acids such as stearic acid, metal oxides such as zinc oxide, and fatty acid metal salts such as zinc stearate. The vulcanization aids (F) may be used singly, or two or more may be used in combination. The vulcanization aid (F) is usually added in an amount of 0.1 to 15 parts by mass, and preferably 1 to 10 parts by mass per 100 parts by mass of the solid rubber (A) .

Besides the vulcanizing agents, crosslinking agents may be added to the tire rubber composition. Examples of the crosslinking agents include oxygen, organic peroxides, phenolic resins, amino resins, quinone and quinone dioxime derivatives, halogen compounds, aldehyde compounds, alcohol compounds, epoxy compounds, metal halides, organometal halides and silane compounds. These may be used singly, or two or more may be used in combination. The amount of the crosslinking agent is preferably 0.1 to 10 parts by mass per 100 parts by mass of the solid rubber (A).

Where necessary, the tire rubber composition of the invention may include a softener in order to attain improvements in properties such as processability and fluidity while still ensuring that the advantageous effects of the invention are not impaired. Examples of the softeners include process oils such as silicone oils, aromatic oils, TDAEs (treated distilled aromatic extracts), MESs (mild extracted solvates), RAEs (residual aromatic extracts), paraffin oils and naphthenic oils, and resin components such as aliphatic hydrocarbon resins, alicyclic hydrocarbon resins, C9 resins, rosin resins, coumarone-indene resins and phenolic resins. When the tire rubber composition of the invention contains the process oil as the softener, the content thereof from the point of view of bleeding resistance is preferably not more than 50 parts by mass, more preferably not more than 30 parts by mass, and still more preferably not more than 15 parts by mass per 100 parts by mass of the solid rubber (A).

The tire rubber composition of the invention may contain additives as required in order to attain enhancements in properties such as weather resistance, heat resistance and oxidation resistance, while still achieving the advantageous effects of the invention. Examples of such additives include antioxidants, oxidation inhibitors, waxes, lubricants, light stabilizers, scorch inhibitors, processing aids, colorants such as pigments and coloring matters, flame retardants, antistatic agents, matting agents, antiblocking agents, UV absorbers, release agents, foaming agents, antibacterial agents, mildew-proofing agents and perfumes.

Examples of the oxidation inhibitors include hindered phenol compounds, phosphorus compounds, lactone compounds and hydroxyl compounds.

Examples of the antioxidants include amine-ketone compounds, imidazole compounds, amine compounds, phenolic compounds, sulfur compounds and phosphorus compounds. The additives may be used singly, or two or more may be used in combination.

[Methods for producing tire rubber compositions]

The tire rubber composition of the invention may be produced by any methods without limitation as long as the components described hereinabove can be mixed together homogeneously. Examples of the apparatuses used in the production of the tire rubber composition include tangential or intermeshing internal kneaders such as kneader-ruders, Brabender mixers, Banbury mixers and internal mixers, single-screw extruders, twin-screw extruders, mixing rolls and rollers. The production of the rubber composition may be usually carried out at a temperature in the range of 70 to 270°C.

The tire rubber composition of the invention is preferably used as a crosslinked product (vulcanized rubber) by being crosslinked. The vulcanization conditions and methods are not particularly limited, but the composition is preferably vulcanized with a vulcanization mold under conditions where the vulcanization temperature is 120 to 200°C and the vulcanization pressure is 0.5 to 20 MPa.

The crosslinked products are preferably such that the modified liquid diene rubber (B) is extracted therefrom with an extraction ratio of not more than 20 mass%, more preferably not more than 15 mass%, and still more preferably not more than 10 mass%.

The extraction ratio may be calculated by soaking 2 g of the crosslinked product into 400 ml of toluene at 23°C for 48 hours and determining the amount of the modified liquid diene rubber (B) extracted into toluene.

[Tire treads and pneumatic tires]

The tire tread of the present invention includes the tire rubber composition as at least a portion thereof, and exhibits excellent abrasion resistance, rolling resistance performance and steering stability. The structure of the tire tread of the invention is not particularly limited, and may be a monolayer structure or a multilayer structure. In the case of a multilayer structure, the tire rubber composition is preferably used in the layer that is placed in contact with the road surface.

The pneumatic tire of the present invention includes the tire rubber composition as at least a portion thereof, and is preferably, in particular, a pneumatic tire including the tire tread described above. The pneumatic tire of the invention, by virtue of its containing the tire rubber composition as a portion thereof, achieves enhanced steering stability and rolling resistance performance, and also exhibits excellent abrasion resistance.

Examples of the portions of tires in which the rubber composition and crosslinked products of the rubber composition may be used include treads (cap treads, undertreads), sidewalls, rubber reinforcing layers (such as liners) for runflat tires, rim cushions, bead fillers, bead insulations, bead apexes, clinch apexes, belts, belt cushions, breakers, breaker cushions, chafers, chafers pads and strip apexes.

EXAMPLES

The present invention will be described in further detail by presenting Examples hereinbelow without limiting the scope of the invention to such Examples.

The following are the components used in Examples and Comparative Examples.

(Solid rubbers (A))

Solution-polymerized styrene butadiene rubber: HPR355 (manufactured by JSR Corporation, Mw: 400,000, styrene content: 28 mass%, vinyl content: 56 mass%)
Butadiene rubber: BR01 (manufactured by JSR Corporation, Mw: 550,000, cis content: 95 mass%)

(Modified liquid diene rubbers (B))

Modified liquid diene rubbers and liquid diene rubbers obtained in Production Examples 1 to 8 described later (Filler (C))
Silica: ULTRASIL 7000GR (manufactured by Evonik Degussa Japan, wet silica, average particle diameter: 14 nm)

(Vulcanizing agent (D))

Sulfur (sulfur fine powder 200 mesh manufactured by Tsurumi Chemical Industry Co., Ltd.)

(Vulcanization accelerators (E))

Vulcanization accelerator (1): Nocceler CZ-G (manufactured by Ouchi Shinko Chemical Industrial Co., Ltd.)
Vulcanization accelerator (2) : Nocceler D (manufactured by Ouchi Shinko Chemical Industrial Co., Ltd.)
Vulcanization accelerator (3): Nocceler TBT-N (manufactured by Ouchi Shinko Chemical Industrial Co., Ltd.)

(Vulcanization aids (F))

Stearic acid: LUNAC S-20 (manufactured by Kao Corporation)
Zinc oxide: Zinc oxide (manufactured by Sakai Chemical Industry Co., Ltd.)

(Optional components)

TDAE: VivaTec 500 (manufactured by H&R)
Silane coupling agent: Si-75 (manufactured by Evonik Degussa Japan)
Antioxidant: Nocrac 6C (manufactured by Ouchi Shinko Chemical Industrial Co., Ltd.)
Wax: SUNTIGHT S (manufactured by Seiko Chemical Co., Ltd.)

Production Example 1: Production of modified liquid diene rubber (B-1)

A thoroughly dried 5 L autoclave was purged with nitrogen and was loaded with 1280 g of cyclohexane and 66 g of sec-butyllithium (a 10.5 mass% cyclohexane solution). The temperature was increased to 50°C. While performing stirring, 1350 g of butadiene was added stepwise while controlling the polymerization temperature at 50°C. Under such conditions, the polymerization was performed for 1 hour. The polymerization reaction was terminated by the addition of methanol. A polymer solution was thus obtained. Water was added to the polymer solution, and the mixture was stirred to wash the polymer solution with water. The stirring was terminated. After the liquid had separated into the polymer solution phase and the aqueous phase, the water was removed. After the completion of washing, the polymer solution was vacuum dried at 70°C for 24 hours to afford an unmodified liquid diene rubber (B'-1).
Subsequently, a 1 L-volume autoclave was loaded with 700 g of the unmodified liquid diene rubber (B'-1) obtained above, and the system was deaerated with nitrogen while performing stirring at 60°C for 3 hours. There were added 1.0 g of 1,1-bis(t-hexylperoxy)cyclohexane and 25 g of (3-mercaptopropyl)triethoxysilane. The reaction was performed at 105°C for 8 hours. A modified liquid diene rubber (B-1) was thus obtained.

Production Example 2: Production of modified liquid diene rubber (B-2)

A modified liquid diene rubber (B-2) was obtained by performing the reaction in the same manner as in Production Example 1, except that the amount of (3-mercaptopropyl)triethoxysilane used for modification was changed to 50 g.

Production Example 3: Production of modified liquid diene rubber (B-3)

A 1 L-volume autoclave was loaded with 700 g of the unmodified liquid diene rubber (B'-1), and the system was deaerated with nitrogen while performing stirring at 60 °C for 3 hours. There were added 5.0 g of 2,2'-azobis(2-methylbutyronitrile) and 45 g of (3-mercaptopropyl)trimethoxysilane. The reaction was performed at 80°C for 24 hours. A modified liquid diene rubber (B-3) was thus obtained.

Production Example 4: Production of modified liquid diene rubber (B-4)

A modified liquid diene rubber (B-4) was obtained by performing the reaction in the same manner as in Production Example 1, except that the amount of (3-mercaptopropyl)triethoxysilane used for modification was changed to 270 g.

Production Example 5: Production of modified liquid diene rubber (B-5)

A modified liquid diene rubber (B-5) was obtained by performing the reaction in the same manner as in Production Example 1, except that the amount of (3-mercaptopropyl)triethoxysilane used for modification was changed to 470 g.

Production Example 6: Production of modified liquid diene rubber (B-6)

A modified liquid diene rubber (B-6) was obtained by performing the reaction in the same manner as in Production Example 1, except that the amount of (3-mercaptopropyl)triethoxysilane used for modification was changed to 12.5 g.

Production Example 7: Production of modified liquid diene rubber (B-7)

A thoroughly dried 5 L autoclave was purged with nitrogen and was loaded with 1320 g of cyclohexane and 33 g of sec-butyllithium (a 10.5 mass% cyclohexane solution). The temperature was increased to 50°C. While performing stirring, 1350 g of butadiene was added stepwise while controlling the polymerization temperature at 50°C. Under such conditions, the polymerization was performed for 1 hour. The polymerization reaction was terminated by the addition of methanol. A polymer solution was thus obtained. Water was added to the polymer solution, and the mixture was stirred

to wash the polymer solution with water. The stirring was terminated. After the liquid had separated into the polymer solution phase and the aqueous phase, the water was removed. After the completion of washing, the polymer solution was vacuum dried at 70°C for 24 hours to afford an unmodified liquid diene rubber (B'-7).

Subsequently, a 1 L-volume autoclave was loaded with 700 g of the unmodified liquid diene rubber (B'-7) obtained above, and the system was deaerated with nitrogen while performing stirring at 60°C for 3 hours. There were added 5.0 g of 2,2'-azobis(2-methylbutyronitrile) and 21 g of (3-mercaptopropyl)trimethoxysilane. The reaction was performed at 80°C for 24 hours. A modified liquid diene rubber (B-7) was thus obtained.

Production Example 8: Production of modified liquid diene rubber (B-8)

A thoroughly dried 5 L autoclave was purged with nitrogen and was loaded with 1400 g of cyclohexane and 89 g of sec-butyllithium (a 10.5 mass% cyclohexane solution). The temperature was increased to 50°C. While performing stirring, 4.2 g of N,N,N',N'-tetramethylethylenediamine and 1215 g of butadiene were added stepwise while controlling the polymerization temperature at 50°C. Under such conditions, the polymerization was performed for 1 hour. The polymerization reaction was terminated by the addition of methanol. A polymer solution was thus obtained. Water was added to the polymer solution, and the mixture was stirred to wash the polymer solution with water. The stirring was terminated. After the liquid had separated into the polymer solution phase and the aqueous phase, the water was removed. After the completion of washing, the polymer solution was vacuum dried at 70°C for 24 hours to afford an unmodified liquid diene rubber (B'-8).

Subsequently, a 1 L-volume autoclave was loaded with 580 g of the unmodified liquid diene rubber (B'-8) obtained above, and the system was deaerated with nitrogen while performing stirring at 60°C for 3 hours. There were added 4.1 g of 2,2'-azobis(2-methylbutyronitrile) and 68 g of (3-mercaptopropyl)triethoxysilane. The reaction was performed at 80°C for 24 hours. A modified liquid diene rubber (B-8) was thus obtained.

Properties of the modified liquid diene rubbers and other materials obtained in Production Examples were measured and calculated by the following methods.

(Method for measuring weight average molecular weight)

The Mw of the modified liquid diene rubbers (B) was measured by GPC (gel permeation chromatography) relative to standard polystyrenes. The measurement involved the following apparatus and conditions.

- Apparatus: GPC apparatus "GPC 8020" manufactured by TOSOH CORPORATION
- Separation column: "TSKgel G4000HXL" manufactured by TOSOH CORPORATION
- Detector: "RI-8020" manufactured by TOSOH CORPORATION
- Eluent: Tetrahydrofuran
- Eluent flow rate: 1.0 mL/min
- Sample concentration: 5 mg/10 mL
- Column temperature: 40°C

(Vinyl content)

The vinyl content of the modified liquid diene rubbers (B) was measured with $^1$H-NMR (500 MHz) manufactured by JEOL Ltd. The concentration was sample/deuterated chloroform = 50 mg/1 mL. The number of scans was 1024. With respect to the spectrum obtained, the vinyl content was calculated from the ratio of the area of the double-bond peak assigned to the vinylated diene compound to the area of the double-bond peak assigned to the non-vinylated diene compound.

(Glass transition temperature)

A 10 mg portion of the modified liquid diene rubber (B) was placed into an aluminum pan and was analyzed by differential scanning calorimetry (DSC) at a heat-up rate of 10°C/min. With respect to the thermogram obtained, the peak top value of the DDSC curve was adopted as the glass transition temperature (Tg).

(Method for measuring melt viscosity at 38°C)

The melt viscosity of the modified liquid diene rubbers (B) at 38°C was measured with a Brookfield viscometer (manufactured by BROOKFIELD ENGINEERING LABS. INC.).

(Average number of functional groups per molecule of modified liquid diene rubber (B))

The average number of functional groups per molecule of the modified liquid diene rubber (B) may be calculated from the functional group equivalent weight (g/eq) and the styrene equivalent number average molecular weight Mn of the modified liquid diene rubber (B).

(Average number of functional groups per molecule) = [(Number average molecular weight Mn)/(Molecular weight of styrene unit) × (Average molecular weight of units of conjugated diene and optional monomers other than conjugated dienes)]/(Functional group equivalent weight)

The functional group equivalent weight of the modified liquid diene rubber (B) indicates the mass of butadiene and optional monomers other than butadiene that are bonded together per one functional group. The functional group equivalent weight may be calculated from the ratio of the area of the peak assigned to the polymer main chains to the area of the peak assigned to the functional groups using $^{1}H$-NMR or $^{13}C$-NMR. The peak assigned to the functional groups is a peak assigned to alkoxy groups.

Table 1 below describes the properties of the modified liquid diene rubbers (B-1) to (B-8) and the unmodified liquid diene rubbers (B'-1) and (B'-7) obtained in Production Examples 1 to 8.

[Table 1]

| | Weight average molecular weight ($\times 10^3$) | Butadiene content (wt%) | Vinyl content (mol%) | Tg (°C) | Melt viscosity (38°C) (Pa·s) | Average number of functional groups per molecule (groups) |
|---|---|---|---|---|---|---|
| Modifiedliquid diene rubber (B-1) | 30 | 100 | 10 | -92 | 90 | 2 |
| Modifiedliquid diene rubber (B-2) | 30 | 100 | 10 | -88 | 90 | 4 |
| Modifiedliquid diene rubber (B-3) | 30 | 100 | 10 | -92 | 90 | 4 |
| Modifiedliquid diene rubber (B-4) | 30 | 100 | 10 | -84 | 250 | 16 |
| Modifiedliquid diene rubber (B-5) | 30 | 100 | 10 | -80 | 400 | 35 |
| Modifiedliquid diene rubber (B-6) | 30 | 100 | 10 | -92 | 70 | 1 |
| Modifiedliquid diene rubber (B-7) | 45 | 100 | 10 | -93 | 460 | 4 |

(continued)

| | Weight average molecular weight ($\times 10^3$) | Butadiene content (wt%) | Vinyl content (mol%) | Tg (°C) | Melt viscosity (38°C) (Pa·s) | Average number of functional groups per molecule (groups) |
|---|---|---|---|---|---|---|
| Modified liquid diene rubber (B-8) | 20 | 100 | 70 | -36 | 390 | 4 |
| Liquid diene rubber (B'-1) | 30 | 100 | 10 | -94 | 40 | 0 |
| Liquid diene rubber (B'-7) | 45 | 100 | 10 | -92 | 200 | 0 |

Examples 1 to 10 and Comparative Examples 1 to 4

The solid rubbers (A), the modified liquid diene rubber (B), the filler (C), TDAE, the silane coupling agent, zinc oxide, stearic acid, the wax and the antioxidant were added in the amounts (parts by mass) described in Table 2 into an internal Banbury mixer and were kneaded together for 6 minutes from a start temperature of 60°C to a resin temperature of 150°C. Thereafter, the kneaded mixture was removed from the mixer and was cooled to room temperature. Next, the mixture was placed into the Banbury mixer again, and the vulcanizing agent (sulfur) and the vulcanization accelerators were added. The resultant mixture was kneaded at 100°C for 75 seconds to give a rubber composition.

The rubber composition obtained was subjected to press forming (160°C, 30 to 50 minutes) to give a vulcanized rubber sheet (2 mm in thickness). The abrasion resistance, the steering stability and the rolling resistance performance were evaluated by the methods described below. The results are described in Table 2.

The measurement methods for evaluations are described below.

(Abrasion resistance)

The DIN abrasion loss was measured with a load of 10 N and an abrasion distance of 40 m in accordance with JIS K 6264. The data of Examples and Comparative Examples in Table 2 are values relative to the reciprocal of the DIN abrasion loss obtained in Comparative Example 1 in Table 2 taken as 100. The larger the value, the smaller the abrasion loss and the more excellent the abrasion resistance.

(Steering stability)

The sheet of the rubber composition prepared in Example or Comparative Example was cut to give a test piece 40 mm in length and 5 mm in width. The test piece was tested on a dynamic viscoelastometer manufactured by GABO GmbH at a measurement temperature of 25°C or 60°C, a frequency of 10 Hz, a static strain of 10% and a dynamic strain of 2% to determine E' as an index of steering stability. The data obtained in Examples and Comparative Examples are values relative to the value of Comparative Example 1 in Table 2 taken as 100. With increasing magnitude of the value, the rubber composition exhibits higher steering stability when used as tires.

(Rolling resistance performance)

The sheet of the rubber composition prepared in Example or Comparative Example was cut to give a test piece 40 mm in length and 5 mm in width. The test piece was tested on a dynamic viscoelastometer manufactured by GABO GmbH at a measurement temperature of 60°C, a frequency of 10 Hz, a static strain of 10% and a dynamic strain of 2% to determine tan$\delta$ as an index of rolling resistance performance. The data obtained in Examples and Comparative Examples are values relative to the value of Comparative Example 1 in Table 2 taken as 100. The smaller the value, the higher the rolling resistance performance of the rubber composition.

[Table 2]

| | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| Amounts (parts by mass) | Components (A) | Solution-polymerized styrene butadiene rubber | 80 | 80 | 80 | 80 | 80 | 80 | 80 | 80 | 80 | 80 |
| | | Butadiene rubber | 20 | 20 | 20 | 20 | 20 | 20 | 20 | 20 | 20 | 20 |
| | Components (B) | Modified liquid diene rubber (B-1) | 6 | | | | | | | | | |
| | | Modified liquid diene rubber (B-2) | | 6 | | | | | | | 12 | |
| | | Modified liquid diene rubber (B-3) | | | 6 | | | | | | | 12 |
| | | Modified liquid diene rubber (B-4) | | | | 6 | | | | | | |
| | | Modified liquid diene rubber (B-5) | | | | | 6 | | | | | |
| | | Modified liquid diene rubber (B-6) | | | | | | 6 | | | | |
| | | Modified liquid diene rubber (B-7) | | | | | | | 6 | | | |
| | | Modified liquid diene rubber (B-8) | | | | | | | | 6 | | |
| | | Liquid diene rubber (B'-1) | | | | | | | | | | |
| | | Liquid diene rubber (B'-7) | | | | | | | | | | |
| | Component (C) | Silica | 100 | 100 | 100 | 100 | 100 | 100 | 100 | 100 | 100 | 100 |
| | Optional components | TDAE | 29 | 29 | 29 | 29 | 29 | 29 | 29 | 29 | 23 | 23 |
| | | Silane coupling agent | 8 | 8 | 8 | 8 | 8 | 8 | 8 | 8 | 8 | 8 |
| | | Zinc oxide | 3 | 3 | 3 | 3 | 3 | 3 | 3 | 3 | 3 | 3 |
| | | Stearic acid | 2.5 | 2.5 | 2.5 | 2.5 | 2.5 | 2.5 | 2.5 | 2.5 | 2.5 | 2.5 |
| | | Wax | 2 | 2 | 2 | 2 | 2 | 2 | 2 | 2 | 2 | 2 |
| | | Antioxidant | 2.5 | 2.5 | 2.5 | 2.5 | 2.5 | 2.5 | 2.5 | 2.5 | 2.5 | 2.5 |
| | | Sulfur | 1.5 | 1.5 | 1.5 | 1.5 | 1.5 | 1.5 | 1.5 | 1.5 | 1.5 | 1.5 |
| | | Vulcanization accelerator (1) | 0.35 | 0.35 | 0.35 | 0.35 | 0.35 | 0.35 | 0.35 | 0.35 | 0.35 | 0.35 |
| | | Vulcanization accelerator (2) | 0.5 | 0.5 | 0.5 | 0.5 | 0.5 | 0.5 | 0.5 | 0.5 | 0.5 | 0.5 |
| | | Vulcanization accelerator (3) | 1.5 | 1.5 | 1.5 | 1.5 | 1.5 | 1.5 | 1.5 | 1.5 | 1.5 | 1.5 |
| Properties | Abrasion resistance (relative value) | | 113 | 116 | 117 | 114 | 106 | 115 | 114 | 108 | 131 | 128 |
| | Steering stability (E' at 25°C, relative value) | | 100 | 100 | 100 | 104 | 119 | 101 | 100 | 120 | 100 | 101 |
| | Steering stability (E' at 60°C, relative value) | | 100 | 101 | 103 | 107 | 118 | 101 | 103 | 119 | 106 | 108 |
| | Rolling resistance performance (tanδ at 60°C, relative value) | | 97 | 91 | 96 | 86 | 94 | 103 | 91 | 100 | 83 | 91 |

(Continued)

| | | | Comparative Examples | | | |
|---|---|---|---|---|---|---|
| | | | 1 | 2 | 3 | 4 |
| Amounts (parts by mass) | Components (A) | Solution-polymerized styrene butadiene rubber | 80 | 80 | 80 | 80 |
| | | Butadiene rubber | 20 | 20 | 20 | 20 |
| | Components (B) | Modified liquid diene rubber (B-1) | | | | |
| | | Modified liquid diene rubber (B-2) | | | | |
| | | Modified liquid diene rubber (B-3) | | | | |
| | | Modified liquid diene rubber (B-4) | | | | |
| | | Modified liquid diene rubber (B-5) | | | | |
| | | Modified liquid diene rubber (B-6) | | | | |
| | | Modified liquid diene rubber (B-7) | | | | |
| | | Modified liquid diene rubber (B-8) | | | | |
| | | Liquid diene rubber (B'-1) | | 6 | 12 | |
| | | Liquid diene rubber (B'-7) | | | | 12 |
| | Component (C) | Silica | 100 | 100 | 100 | 100 |
| | Optional components | TDAE | 35 | 29 | 23 | 23 |
| | | Silane coupling agent | 8 | 8 | 8 | 8 |
| | | Zinc oxide | 3 | 3 | 3 | 3 |
| | | Stearic acid | 2.5 | 2.5 | 2.5 | 2.5 |
| | | Wax | 2 | 2 | 2 | 2 |
| | | Antioxidant | 2.5 | 2.5 | 2.5 | 2.5 |
| | | Sulfur | 1.5 | 1.5 | 1.5 | 1.5 |
| | | Vulcanization accelerator (1) | 0.35 | 0.35 | 0.35 | 0.35 |
| | | Vulcanization accelerator (2) | 0.5 | 0.5 | 0.5 | 0.5 |
| | | Vulcanization accelerator (3) | 1.5 | 1.5 | 1.5 | 1.5 |
| Properties | Abrasion resistance (relative value) | | 100 | 110 | 110 | 107 |
| | Steering stability (E' at 25°C, relative value) | | 100 | 101 | 98 | 110 |
| | Steering stability (E' at 60°C, relative value) | | 100 | 99 | 95 | 108 |
| | Rolling resistance performance (tanδ at 60°C, relative value) | | 100 | 113 | 128 | 117 |

As shown in Table 2, Examples 1 to 10 which involved the modified liquid diene rubber resulted in high abrasion resistance and good rolling resistance performance, and also resulted in high storage moduli at 25 °C and 60°C, thus achieving excellent steering stability, as compared to Comparative Example 1. In contrast, Comparative Examples 2 to 4 in which the rubber added was the unmodified liquid diene rubber (B'-1) or (B'-7) resulted in a significant decrease in rolling resistance performance, although the abrasion resistance was enhanced.

## INDUSTRIAL APPLICABILITY

The rubber compositions of the present invention have excellent processability and filler dispersibility. Further, when rendered crosslinkable by the addition of a crosslinking agent or the like, the rubber compositions give crosslinked products with excellent properties, for example, enhanced abrasion resistance. Thus, the compositions of the present invention may be suitably used in applications such as tires. In particular, the crosslinked products, etc. are useful as tire treads or the like because enhancements can be achieved in properties such as steering stability and rolling resistance

performance.

## Claims

**1.** A high-grip tire rubber composition comprising 100 parts by mass of a solid rubber (A), the solid rubber (A) comprising not less than 60 mass% of a styrene butadiene rubber with 20 mass% or more styrene content, 0.1 to 90 parts by mass of a modified liquid diene rubber (B) having a functional group derived from a silane compound represented by the formula (1) below, and 20 to 150 parts by mass of a filler (C),
the modified liquid diene rubber (B) satisfying the following (i) and (ii):

(i) the weight average molecular weight (Mw) is 15,000 to 120,000, and
(ii) the vinyl content is not more than 70 mol%,

[Chem. 1]

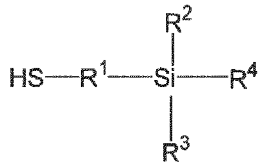

(1)

wherein $R^1$ is a $C_{1-6}$ divalent alkylene group, and $R^2$, $R^3$ and $R^4$ are each independently a methoxy group, an ethoxy group, a phenoxy group, a methyl group, an ethyl group or a phenyl group, with the proviso that at least one of $R^2$, $R^3$ and $R^4$ is a methoxy group, an ethoxy group or a phenoxy group.

**2.** The high-grip tire rubber composition according to Claim 1, wherein the melt viscosity of the modified liquid diene rubber (B) at 38°C is 1 to 4,000 Pa·s.

**3.** The high-grip tire rubber composition according to Claim 1 or 2, wherein the modified liquid diene rubber (B) is a polymer comprising a monomer unit derived from isoprene and/or butadiene.

**4.** The high-grip tire rubber composition according to any one of Claims 1 to 3, wherein the filler (C) is at least one selected from carbon blacks and silicas.

**5.** The high-grip tire rubber composition according to Claim 4, wherein the composition contains 5 to 80 parts by mass of the modified liquid diene rubber (B) and 20 to 150 parts by mass of the silica per 100 parts by mass of the solid rubber (A).

**6.** The high-grip tire rubber composition according to Claim 4, wherein the composition contains 5 to 80 parts by mass of the modified liquid diene rubber (B) and 25 to 120 parts by mass of the carbon black per 100 parts by mass of the solid rubber (A).

**7.** A crosslinked product obtained by crosslinking the high-grip tire rubber composition described in any one of Claims 1 to 6.

**8.** A tire tread comprising, as at least a portion of the tire tread, the high-grip tire rubber composition described in any one of Claims 1 to 6.

**9.** A bead filler comprising, as at least a portion of the bead filler, the high-grip tire rubber composition described in any one of Claims 1 to 6.

**10.** A tire belt comprising, as at least a portion of the tire belt, the high-grip tire rubber composition described in any one of Claims 1 to 6.

**11.** A pneumatic tire comprising, as at least a portion of the pneumatic tire, the high-grip tire rubber composition described in any one of Claims 1 to 6.

## Patentansprüche

**1.** Kautschukzusammensetzung für Reifen mit hoher Griffigkeit, umfassend 100 Massenteile eines festen Kautschuks (A), wobei der feste Kautschuk (A) nicht weniger als 60 Massen-% eines Styrol-Butadien-Kautschuks mit 20 Massen-% oder mehr Styrolgehalt umfasst, 0,1 bis 90 Massenteile eines modifizierten flüssigen Dienkautschuks (B) mit einer funktionellen Gruppe, die von einer Silanverbindung, dargestellt durch die nachstehende Formel (1), abgeleitet ist, und 20 bis 150 Massenteile eines Füllstoffs (C),
wobei der modifizierte flüssige Dienkautschuk (B) die folgenden (i) und (ii) erfüllt:

(i) das Gewichtsmittel des Molekulargewichts (Mw) beträgt 15000 bis 120000, und
(ii) der Vinylgehalt beträgt nicht mehr als 70 Mol-%,

[Chem. 1]

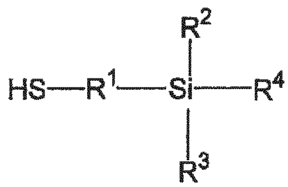

(1)

wobei $R^1$ eine zweiwertige $C_{1-6}$-Alkylengruppe ist und $R^2$, $R^3$ und $R^4$ jeweils unabhängig voneinander eine Methoxygruppe, eine Ethoxygruppe, eine Phenoxygruppe, eine Methylgruppe, eine Ethylgruppe oder eine Phenylgruppe sind, mit der Maßgabe, dass mindestens eines von $R^2$, $R^3$ und $R^4$ eine Methoxygruppe, eine Ethoxygruppe oder eine Phenoxygruppe ist.

**2.** Kautschukzusammensetzung für Reifen mit hoher Griffigkeit nach Anspruch 1, wobei die Schmelzviskosität des modifizierten flüssigen Dienkautschuks (B) bei 38°C 1 bis 4000 Pa·s beträgt.

**3.** Kautschukzusammensetzung für Reifen mit hoher Griffigkeit nach Anspruch 1 oder 2, wobei der modifizierte flüssige Dienkautschuk (B) ein Polymer ist, das eine von Isopren und/oder Butadien abgeleitete Monomereinheit umfasst.

**4.** Kautschukzusammensetzung für Reifen mit hoher Griffigkeit nach einem der Ansprüche 1 bis 3, wobei der Füllstoff (C) mindestens einer ist, ausgewählt aus Rußen und Kieselsäuren.

**5.** Kautschukzusammensetzung für Reifen mit hoher Griffigkeit nach Anspruch 4, wobei die Zusammensetzung 5 bis 80 Massenteile des modifizierten flüssigen Dienkautschuks (B) und 20 bis 150 Massenteile der Kieselsäure pro 100 Massenteile des festen Kautschuks (A) enthält.

**6.** Kautschukzusammensetzung für Reifen mit hoher Griffigkeit nach Anspruch 4, wobei die Zusammensetzung 5 bis 80 Massenteile des modifizierten flüssigen Dienkautschuks (B) und 25 bis 120 Massenteile des Rußes pro 100 Massenteile des festen Kautschuks (A) enthält.

**7.** Vernetztes Produkt, erhalten durch Vernetzen der in einem der Ansprüche 1 bis 6 beschriebenen Kautschukzusammensetzung für Reifen mit hoher Griffigkeit.

**8.** Reifenlauffläche, die als mindestens einen Teil der Reifenlauffläche die in einem der Ansprüche 1 bis 6 beschriebene Kautschukzusammensetzung für Reifen mit hoher Griffigkeit umfasst.

**9.** Wulstfüller, der als mindestens einen Teil des Wulstfüllers die in einem der Ansprüche 1 bis 6 beschriebene Kautschukzusammensetzung für Reifen mit hoher Griffigkeit umfasst.

**10.** Reifengürtel, der als mindestens einen Teil des Reifengürtels die in einem der Ansprüche 1 bis 6 beschriebene Kautschukzusammensetzung für Reifen mit hoher Griffigkeit umfasst.

**11.** Luftreifen, der als mindestens einen Teil des Luftreifens die in einem der Ansprüche 1 bis 6 beschriebene Kautschukzusammensetzung für Reifen mit hoher Griffigkeit umfasst.

**Revendications**

1. Composition de caoutchouc pour pneumatique à forte adhérence, comprenant 100 parties en masse d'un caoutchouc solide (A), le caoutchouc solide (A) comportant pas moins de 60% en masse d'un caoutchouc styrène-butadiène avec une teneur en styrène de 20% en masse ou plus, 0,1 à 90 parties en masse d'un caoutchouc diénique liquide modifié (B) ayant un groupe fonctionnel dérivé d'un composé silane représenté par la formule (1) ci-dessous, et 20 à 150 parties en masse d'une charge (C),
le caoutchouc diénique liquide modifié (B) satisfaisant les critères (i) et (ii) suivants :

   (i) le poids moléculaire moyen en poids (Mw) se situe dans l'intervalle allant de 15 000 à 120 000, et
   (ii) la teneur en vinyle est non supérieure à 70% en moles,

   [Chem. 1]

   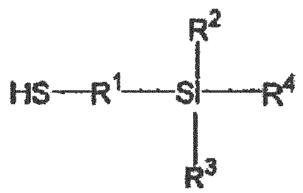

   (1)

   dans laquelle $R^1$ est un groupe alkylène bivalent en $C_{1-6}$, $R^2$, $R^3$ et $R^4$ sont chacun indépendamment, un groupe méthoxy, un groupe éthoxy, un groupe phénoxy, un groupe méthyle, un groupe éthyle ou un groupe phényle, avec la condition qu'au moins l'un des $R^2$, $R^3$ et $R^4$ est un groupe méthoxy, un groupe éthoxy ou un groupe phénoxy.

2. Composition de caoutchouc pour pneumatique à forte adhérence selon la revendication 1, dans laquelle la viscosité à l'état fondu du caoutchouc diénique liquide modifié (B) à 38°C se situe dans l'intervalle allant de 1 à 4000 Pa.s.

3. Composition de caoutchouc pour pneumatique à forte adhérence selon la revendication 1 ou 2, dans laquelle le caoutchouc diénique liquide modifié (B) est un polymère comprenant une unité monomère dérivée de l'isoprène et/ou du butadiène.

4. Composition de caoutchouc pour pneumatique à forte adhérence selon l'une quelconque des revendications 1 à 3, dans laquelle la charge (C) est au moins l'une choisie parmi le noir de carbone et la silice.

5. Composition de caoutchouc pour pneumatique à forte adhérence selon la revendication 4, dans laquelle la composition contient 5 à 80 parties en masse du caoutchouc diénique liquide modifié (B) et 20 à 150 parties en masse de silice par 100 parties en masse du caoutchouc solide (A).

6. Composition de caoutchouc pour pneumatique à forte adhérence selon la revendication 4, dans laquelle la composition contient 5 à 80 parties en masse du caoutchouc diénique liquide modifié (B) et 25 à 120 parties en masse de noir de carbone par 100 parties en masse du caoutchouc solide (A).

7. Produit réticulé obtenu par réticulation de la composition de caoutchouc pour pneumatique à forte adhérence selon l'une quelconque des revendications 1 à 6.

8. Bande de roulement de pneumatique comprenant la composition de caoutchouc pour pneumatique à forte adhérence selon l'une quelconque des revendications 1 à 6, au moins en tant que partie de la bande de roulement de pneumatique.

9. Bourrage sur tringle comprenant la composition de caoutchouc pour pneumatique à forte adhérence selon l'une quelconque des revendications 1 à 6, au moins en tant que partie du bourrage sur tringle.

**10.** Ceinture de pneumatique comprenant la composition de caoutchouc pour pneumatique à forte adhérence selon l'une quelconque des revendications 1 à 6, au moins en tant que partie de la ceinture de pneumatique.

**11.** Pneumatique comprenant la composition de caoutchouc pour pneumatique à forte adhérence selon l'une quelconque des revendications 1 à 6, au moins en tant que partie du pneumatique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014024912 A
- JP 2001081239 A
- JP 2007137941 A
- JP 2010126671 A
- JP 2013185090 A
- JP 2011132298 A